(19) Europäisches Patentamt
European Patent Office
Office européen des brevets

(11) EP 4 103 625 B1

(12) # EUROPEAN PATENT SPECIFICATION

(45) Date of publication and mention of the grant of the patent:
**13.03.2024 Bulletin 2024/11**

(21) Application number: **21703348.9**

(22) Date of filing: **12.02.2021**

(51) International Patent Classification (IPC):
***C08F 8/12*** (2006.01) ***C08F 283/06*** (2006.01)
***C11D 3/37*** (2006.01) ***C08F 287/00*** (2006.01)
***C11D 3/00*** (2006.01)

(52) Cooperative Patent Classification (CPC):
(C-Sets available)
**C11D 3/0036; C08F 8/12; C08F 283/06; C08F 287/00; C11D 3/3707; C11D 3/3753; C11D 3/3788** (Cont.)

(86) International application number:
**PCT/EP2021/053541**

(87) International publication number:
**WO 2021/160851 (19.08.2021 Gazette 2021/33)**

(54) **BIODEGRADABLE GRAFT POLYMERS**

BIOLOGISCH ABBAUBARE PFROPFPOLYMERE

POLYMÈRES GREFFÉS BIODÉGRADABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2020 EP 20157383**

(43) Date of publication of application:
**21.12.2022 Bulletin 2022/51**

(73) Proprietors:
- **BASF SE**
  **67056 Ludwigshafen am Rhein (DE)**
- **The Procter & Gamble Company**
  **Cincinnati, OH 45202 (US)**

(72) Inventors:
- **MUELLER, Jan Ole**
  **67056 Ludwigshafen (DE)**
- **BENLAHMAR, Ouidad**
  **67056 Ludwigshafen (DE)**
- **BECKER, Natalia**
  **67056 Ludwigshafen (DE)**
- **BUECHSE, Andreas**
  **67056 Ludwigshafen (DE)**
- **WANG, Mu**
  **Cincinnati, OH 45202 (US)**
- **SI, Gang**
  **Longbenton NE12 9BZ (GB)**
- **HUELSKOETTER, Frank**
  **65824 Schwalbach am Taunus (DE)**
- **GORCZYNSKA COSTELLO, Katarzyna**
  **Longbenton NE12 9BZ (GB)**
- **SAVEYN, Pieter Jan Maria**
  **1853 Strombeek-Bever (BE)**
- **STERGIOPOULOU, Natalia**
  **1853 Strombeek-Bever (BE)**
- **BOUTIQUE, Jeanpol**
  **1853 Strombeek-Bever (BE)**
- **MAES, Jef, Annie, Alfons**
  **1853 Strombeek-Bever (BE)**
- **BEAN, Jessica Eleanor**
  **66877 Ramstein-Miesenbach (DE)**
- **MARCZEWSKI, Dawid**
  **67117 Limburgerhof (DE)**
- **BOEHN, Roland**
  **67133 Maxdorf (DE)**

(74) Representative: **P&G Patent Belgium UK**
**N.V. Procter & Gamble Services Company S.A.**
**Temselaan 100**
**1853 Strombeek-Bever (BE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**WO-A1-00/18375**
**WO-A1-91/19778**
**WO-A1-2019/197315**
**CN-B- 102 030 871**
**CN-B- 105 330 247**

(52) Cooperative Patent Classification (CPC): (Cont.)

C-Sets
**C08F 8/12, C08F 283/06;**
**C08F 283/06, C08F 218/08;**
**C08F 283/06, C08F 218/08, C08F 226/10;**
**C08F 287/00, C08F 218/08, C08F 226/10**

## Description

The present invention relates to novel graft polymers comprising a block copolymer backbone (A) as a graft base having polymeric sidechains (B) grafted thereon. The polymeric sidechains (B) are obtainable by polymerization of at least one vinyl ester monomer (B1). Most preferably, the block copolymer backbone (A) is a triblock copolymer of polyethylene oxide (PEG) and polypropylene oxide (PPG). The present invention further relates to a process for obtaining such a graft polymer, the process is preferably carried out by free-radical polymerization. Furthermore, the present invention relates to the use of such a graft polymer within fabric and home care products. Another subject-matter of the present invention are fabric and home care products as such, containing such a graft polymer.

Various states have already introduced initiatives to ban microplastics especially in cosmetic products. Beyond this ban of insoluble microplastic there is an intense dialog on future requirements for soluble polymers used in consumer products. It is therefore highly desirable to identify new better biodegradable ingredients for such applications. This problem is predominantly serious for polymers produced by radical polymerization based on carbon-only backbones (a backbone not containing heteroatoms such as oxygen), since a carbon-only backbone is particularly difficult to degrade for microorganisms. Even radically produced graft polymers of industrial importance with a polyethylene glycol backbone show only limited biodegradation in waste-water. However, the polymers described by the current Invention are preferably produced by radical graft polymerization and provide enhanced biodegradation properties compared to the state-of-the-art.

WO 2007/138053 discloses amphiphilic graft polymers based on water-soluble polyalkylene oxides (A) as a graft base and side chains formed by polymerization of a vinyl ester component (B), said polymers having an average of < one graft site per 50 alkylene oxide units and mean molar masses M of from 3 000 to 100 000. However, WO 2007/138053 does not describe any backbone material based on block copolymers. Furthermore, WO 2007/138053 does not contain any disclosure in respect of the biodegradability of the respective graft polymers disclosed therein.

Y. Zhang et al. J. Coll. Inter. Sci 2005, 285, 80, relates to the synthesis and characterization of specific grafted polymers based on a pluronic-type backbone. Pluronic poly(ethylene oxide)-b-poly(propylene oxide)-b-poly(ethylene oxide) (PEO-PPO-PEO) block copolymers are grafted with poly(vinyl pyrrolidone) by free radical polymerization of vinyl pyrrolidone with simultaneous chain transfer to the Pluronic in dioxane. However, Y. Zhang does not disclose that polymeric sidechains of the respective graft polymer are based on vinyl ester monomers. Furthermore, Y. Zhang does not have any disclosure in respect of the biodegradability of the graft polymers disclosed therein. Y. Zhang also does not contain any disclosure about the use of such graft polymer within fabric and home care products.

WO 03/042262 relates to graft polymers comprising (A) a polymer graft skeleton with no mono-ethylenic unsaturated units and (B) polymer sidechains formed from co-polymers of two different mono-ethylenic unsaturated monomers (B1) and (B2), each comprising a nitrogen-containing heterocycle, whereby the proportion of the sidechains (B) amounts to 35 to 55 wt.-% of the total polymer. However, the graft polymers according to WO 03/042262 are not based on vinyl ester monomers within the respective polymer sidechains grafted onto the backbone. Beyond that, WO 03/042262 does not have any disclosure in connection with the biodegradability of the graft polymers disclosed therein.

US-A 5,318,719 relates to a novel class of biodegradable water-soluble graft copolymers having building, anti-filming, dispersing and threshold crystal inhibiting properties comprising (a) an acid functional monomer and optionally (b) other water-soluble, monoethylenically unsaturated monomers copolymerizable with (a) grafted to a biodegradable substrate comprising polyalkylene oxides and/or polyalkoxylated materials. However, US-A 5,318,719 does not disclose the use of a block copolymer backbone within the respective graft polymers. Furthermore, the respective sidechain of said graft polymers mandatorily comprises high amounts of acid-functional monomers, such as acrylic acid or methacrylic acid. Such types of acid monomers are not useful within the context of the present invention.

The object of the present invention is to provide novel graft polymers. Furthermore, these novel graft polymers should have beneficial properties in respect of biodegradability and their washing behavior, when being employed within compositions such as cleaning compositions.

This object is achieved by a graft polymer comprising

(A) a block copolymer backbone as a graft base, wherein said block copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide, where said block copolymer backbone (A) has three or more alkylene oxide blocks;

(B) polymeric sidechains grafted onto the block copolymer backbone (A), wherein said polymeric sidechains (B) are obtainable by polymerization of at least one vinyl ester monomer (B1),

wherein the vinyl ester monomer (B1) comprises at least 50%, by weight of B1 monomers, vinyl acetate,

wherein the polymer has an OG of greater than 0, wherein

$$OG = a_X\ EO + b_X\ M_n^2 - c_X\ (M_n \times SUB) - d_X\ M_n + e_X\ SUB + h_X$$

wherein:

"$M_n$" is the number average molecular weight of the block copolymer backbone (A);
"EO" is the molar ratio of ethylene oxide moieties to total alkylene oxide moieties present in the backbone (A), wherein EO is in the range of from 0 to less than 1.00,
"SUB" is the weight percentage, by weight of the polymer, of polymeric sidechains (B);
"$a_{X}$"" is a coefficient and equals 7.06;
"$b_X$" is a coefficient and equals $5.63 \times 10^{-7}$;
"$c_X$" is a coefficient and equals $1.25 \times 10^{-3}$;
"dx" is a coefficient and equals $7.03 \times 10^{-3}$;
"ex" is a coefficient and equals 3.66; and
"hx" is a coefficient and equals 16.3.

Preferred graft polymers also have a FJ of greater than 0, wherein

$$FJ = a_Y\ EO - b_Y\ M_n^2 + d_Y\ M_n + e_Y\ SUB - f_Y\ SUB^2 - g_Y\ (EO \times SUB) - h_Y$$

wherein:

"$a_Y$" is a coefficient and equals 446;
"$b_Y$" is a coefficient and equals $4.02 \times 10^{-6}$;
"dy" is a coefficient and equals 0.0168;
"$e_Y$" is a coefficient and equals 281;
"$f_Y$" is a coefficient and equals 229;
"$g_Y$" is a coefficient and equals 1140; and
"$h_Y$" is a coefficient and equals 83.6.

In a preferred version of the previous embodiment, the number (x) of individual blocks within the block copolymer backbone (A) is an integer, wherein x is from 3 to 10, preferably 3 to 5, more preferably 3.

The graft polymers according to the present invention may be used, for example, within cleaning compositions and/or fabric and home care products. They lead to an at least comparable and preferably even improved anti redeposition and cleaning performance within such compositions or products, for example in respect of redeposition of soils and removing of stains, compared to corresponding polymers or graft polymers according to the prior art. Beyond that, the graft polymers according to the present invention lead to an improved biodegradability when being employed within such compositions or products, for example within cleaning compositions and/or fabric and home care products.

Graft polymers with enhanced biodegradation according to the current invention can be used advantageously in washing and cleaning compositions, where they support the removal of various hydrophobic and hydrophilic soils, such as body soils, food and grease soil, particulate soil such clay or carbon black, grass soil, make-up, motor oil etc. from textile or hard surfaces by the surfactants and thus improve the washing and cleaning performances of the formulations.

Moreover, the graft polymers also bring about better dispersion of the removed soil in the washing or cleaning liquor and prevent its redeposition onto the surfaces of the washed or cleaned materials. Herein, the removed soil include all typical soil that exist in the laundry process, for example, body soil, food and grease soil, particulate soil such clay or carbon black, grass soil, make-up, motor oil etc. Such anti-redeposion effect can be observed on various fabric types, including cotton, polycotton, polyester, copolymer of poly ether / poly urea (Spandex™), etc. In addition, such anti-redeposition effect is also effective on fabrics that have a fabric enhancer history, or when the fabric wash is carried out in the presence of fabric enhancer or other laundry additives such as freshness beads or bleach.

The term "block copolymer (backbone)" as used herein means that the respective polymer comprises at least two (two or more) homopolymer subunits (blocks) linked by covalent bonds. Two block copolymers have two distinct blocks (homopolymer subunits), whereas triblock copolymers have, by consequence, three distinct blocks (homopolymer subunits) and so on. The number of individual blocks within such block copolymers is not limited, by consequence, a "n-block copolymer" comprises n distinct blocks (homopolymer subunits). Within the individual blocks (homopolymer

subunits) the size/length of such a block may vary. The smallest length/size of a block is based on two individual monomers (as a minimum). The understanding of the term "block copolymer" is defined in further detail below, in particular with the definition of "triblock copolymer" according to general formula (A1) or general formula (A2).

The invention is specified in more detail as follows.

The first subject-matter of the present invention relates to a graft polymer comprising

(A) a block copolymer backbone as a graft base, wherein said block copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide, where said block copolymer backbone (A) has three or more alkylene oxide blocks;

(B) polymeric sidechains grafted onto the block copolymer backbone (A), wherein said polymeric sidechains (B) are obtainable by polymerization of at least one vinyl ester monomer (B1),

wherein the vinyl ester monomer (B1) comprises at least 50%, by weight of B1 monomers vinyl acetate.

The ratio of the block copolymer backbone (A) versus the polymeric side chains (B) within the graft polymers according to the present invention is not limited to specific values. Any ratio known to a person skilled in the art can be employed. However, it is understood that the graft polymers comprise more than 1% by weight of the polymeric sidechains (B) in relation to the total weight of the graft polymer (SUB = 0.01). Preferably the graft polymers comprise more than 5% by weight of the polymeric sidechains (B) in relation to the total weight of the graft polymer (SUB = 0.05). More preferably the graft polymers comprise more than 10% by weight of the polymeric sidechains (B) in relation to the total weight of the graft polymer (SUB = 0.10).

In a preferred version of the previous embodiment, the number (x) of individual blocks within the block copolymer backbone (A) is an integer, wherein x is from 3 to 10, preferably 3 to 5, more preferably 3.

Graft polymers are preferred that comprise 20 to 95% by weight of the block copolymer backbone (A) and 5 to 80% by weight of the polymeric sidechains (B) (in relation to the total weight of the graft polymer).

Preferably the graft polymer comprises 40 to 90% by weight, more preferably 50 to 85% by weight, even more preferably 55 to 80% by weight of the block copolymer backbone (A), and preferably 10 to 60% by weight, more preferably 15 to 50% by weight, even more preferably 20 to 45% by weight of the polymeric sidechains (B) (in relation to the total weight of the graft polymer).

Block copolymer backbones (A) as such are known to a person skilled in the art as well as methods for producing such block copolymers backbones. Various types of such block copolymer backbones are commercially available, for example under the trademark series "Pluronic" (BASF SE, Ludwigshafen, Germany). Specific examples are Pluronic PE 6100, Pluronic PE 6800 or Pluronic PE 3100.

Suitable block copolymer backbones (A) to be employed within the present invention are described, for example, within EP-A 0 362 688. Within the present invention, it is preferred that the respective monomer to be employed for preparing the individual blocks of the block copolymer backbone (A) are added in sequence. However, it is possible at the transition of the feed from one monomer to the other to produce so called "dirty structures" wherein at the edge/border of the respective block a small number of monomers of the respective neighboring block may be contained within the individual block to be considered. However, it is preferred that the block copolymer backbones (A) according to the present invention do not contain any so called "dirty structures" or "dirty passages" at the respective border of the blocks.

In respect of the block copolymer backbone (A) of the graft polymers according to the present invention, it is preferred that the block copolymer backbone (A) is obtainable by polymerization of

i) at least two monomers selected from the group of ethylene oxide, 1,2-propylene oxide or 1,2-butylene oxide, preferably by polymerization of ethylene oxide and 1,2-propylene oxide as monomers, and/or

ii) one of the at least two monomers employed is ethylene oxide, preferably the second monomer employed is 1,2-propylene oxide, and/or

iii) the number of individual alkylene oxide blocks (x) within the block copolymer backbone (A) is an integer, wherein x has a value from 3 to 10, preferably x has a value from 3 to 5, more preferably x is 3.

In case x is a even number, typically the graft polymer comprises an end capping group. Suitable end capping groups is described in detail below.

The graft polymer according to the present invention may have any molecular weight known to a person skilled in the art. However, it is preferred that the graft polymer has a weight average molecular weight $M_w$ of from 1 000 to 100 000 g/mol, preferably from 2 000 to 45 000 g/mol and more preferably from 3 000 to 30 000 g/mol.

The graft polymers according to the present invention preferably have a low polydispersity. It is preferred that the graft polymer has a polydispersity $M_w/M_n$ of < 3, preferably < 2.5, more preferably < 2.3, and most preferably in the

range from 1.0 to 2.2 (with $M_w$ = weight average molecular weight and $M_n$ = number average molecular mass; the polydispersity being without unit $[^g/_{mol} / \ ^g/_{mol}]$ ). The respective values of $M_w$ and/or $M_n$ can be determined as described within the experimental section below.

The inventive graft polymers may contain polymeric sidechains (B) in ungrafted form. The levels of ungrafted polymeric sidechains may be high or low, depending on the reaction conditions. Preferably, the level of ungrafted polymeric sidechains is typically below 25%. More preferably, the level of ungrafted polymeric sidechains is below 15%. More preferably, the level of ungrafted polymeric sidechains is below 5%. All based on the the total weight of the polymers in the inventive graft polymer product as produced or producible by the process descripbed in this invention.

The inventive graft polymers may contain ungrafted blockcopolymer backbone (A). The levels of ungrafted blockcopolymer backbone (A) may be high or low, depending on the reaction conditions. Preferably, the level of ungrafted blockcopolymer backbone (A) is typically below 50%. More preferably, the level of ungrafted blockcopolymer backbone (A) is below 30%. More preferably, the level of ungrafted blockcopolymer backbone (A) is below 10%. All based on the the total weight of the polymers in the inventive graft polymer product as produced or producible by the process descripbed in this invention.

The inventive graft polymers maybe characterized by their degree of grafting (number of graft sites of the polymeric sidechains (B) on the blockcopolymer backbone (A)). The degree of graft may be high (more than 1 polymeric sidechans per 50 alkylene oxide units) or low (less than 1 polymeric sidechans per 50 alkylene oxide units), depending on the reaction conditions. It is possible to adjust degree of grafting to achieve optimized performance in certain benefit area. The degree of branching can be determined, for example, by means of 13C NMR spectroscopy from the integrals of the signals of the graft site and the $-CH_2-$ groups of the polyalkylene oxide.

The block copolymer backbone (A) contained within the graft polymer according to the present invention may either be capped or not capped (uncapped) at the respective endgroups of the backbone. By consequence, within the present invention, it is possible that the block copolymer backbone (A) is optionally capped at one or both endgroups, preferably the block copolymer backbone (A) is not capped at both endgroups or, if the block copolymer backbone (A) is capped, the capping is done by $C_1$-$C_{25}$-alkyl groups.

In one embodiment of the present invention, it is preferred that the block copolymer backbone (A) is a triblock copolymer of polyethylene oxide (PEG) and polypropylene oxide (PPG).

Within the context of the present invention, it is generally preferred that the graft polymer has a block copolymer backbone (A) having the structure according to formula (A1) or formula (A2) with formula (A1) is defined as follows:

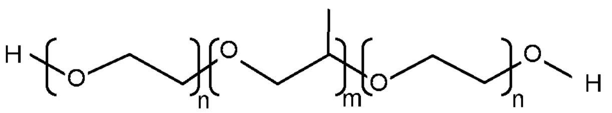

(A1)

with

n is an integer in the range of 2 to 100, preferably of 3 to 80, and
m is an integer in the range of 2 to 100, preferably of 10 to 70, more preferably of 14 to 54, or

formula (A2) is defined as follows:

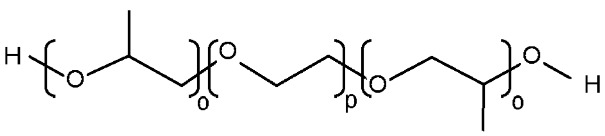

(A2)

with

o is an integer in the range of 2 to 100, preferably of 5 to 50, more preferably of 8 to 27, and
p is an integer in the range of 2 to 100, preferably of 5 to 50, more preferably of 7 to 24.

Block copolymers (A) can contain different levels of hydrophilic ethylene glycol which influences the overall properties of the graft polymer. The total EO content ("EO") describing the total amount of ethylene glycol units in the block copolymer is defined as:

"EO" is the molar ratio of ethylene oxide moieties to total alkylene oxide moieties present in the backbone (A), wherein EO is in the range of from 0 to less than 1.00,

The block copolymers can be low, medium or high respective "EO" which has effects on the biodegradation properties as well as the performance in laundry formulations. The ranges are defined as follows:

| | |
|---|---|
| - Low: | 0.05 - 0.20 |
| - Medium: | 0.21 - 0.50 |
| - High: | 0.51 - 0.90 |

In respect of the polymeric sidechains (B) contained within the graft polymer according to the present invention, it is preferred that the polymeric sidechains (B) are obtained by radical polymerization and/or the at least one vinyl ester monomer (B1) is vinyl acetate

As vinyl ester monomer (B1), any further vinyl ester besides vinyl acetate may be employed which are known to a person skilled in the art, provided that the vinyl ester monomer (B1) comprises at least 50%, by weight of B1 monomers, vinyl acetate. Suitable other vinyl esters include vinyl propionate, vinyl valerate, vinyl pivalate, vinyl neononanoate, vinyl decanoate, vinyl benzoate, vinyl laurate, more preferably vinyl propionate or vinyl laurate. In case N-vinylpyrrolidone as optional further monomer (B2) is employed for preparing the polymeric sidechains (B) within the graft polymers according to the present invention, the ratio of the mandatory vinyl ester monomer (B1) versus said further monomer (B2) may have any value known to a person skilled in the art. However, the amount of vinyl ester monomer (B1) is usually not smaller than 1% by weight (in relation to the sum of (B1) and (B2)). By consequence, the polymeric sidechains (B) may be obtained by, preferably, radical polymerization of 1 to 100% by weight of monomer (B1), which is most preferably vinyl acetate, and 0 to 99% by weight of N-vinylpyrrolidone as optional further monomer (B2).

However, it is preferred within the context of the present invention that the polymeric sidechains (B) are obtained by free radical polymerization of

(B1) 10 to 100% by weight (in relation to the sum of (B1) and (B2)) of at least one vinyl ester monomer (B1), preferably 50 to 100% by weight, more preferably 75 to 100% by weight, and

(B2) 0 to 90% by weight (in relation to the sum of (B1) and (B2)) of N-vinylpyrrolidone as further monomer (B2), preferably 0 to 50% by weight, more preferably 0 to 25% by weight.

It is even more preferred within the context of the present invention that the polymeric sidechains (B) are obtained by radical polymerization of 100% by weight (in relation to the total amount of monomers employed) of at least one vinyl ester monomer (B1), which is preferably vinyl acetate or vinyl propionate, more preferably vinyl acetate.

In another embodiment of the present invention, the polymeric sidechains (B) of the graft polymer according to the present invention are fully or at least partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or at least partial hydrolyzation of the polymeric sidechains (B) of the graft polymers according to the present invention, the respective sidechain units originating from the at least one vinyl ester monomer (B1) are changed from the respective ester function into the alcohol function within the polymeric sidechain (B). It has to be noted that the corresponding vinyl alcohol is not suitable to be employed as monomer within the polymerization process of the polymeric sidechains (B) due to stability aspects. In order to obtain an alcohol function (hydroxy substituent) within the polymeric sidechains (B) of the graft polymers according to the present invention, the alcohol function is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed (saponified). It is noted that in case N-vinylpyrrolidone is employed as further monomer, typically no hydrolyzation takes place at those units of the polymeric sidechain (B) which originates from N-pyrrolidone employed as further monomer (B).

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) is only carried out partially, for example, to an extend of up to 20wt%, 40wt% or 60wt% (in relation to the total weight of the polymeric sidechains).

Within this embodiment, the polymeric sidechains (B) maybe fully or partially hydrolyzed after polymerization, preferably to an extent of up to 50wt% in relation to the amount of the at least one vinyl ester monomer (B1) employed within the polymerization. However, preferably the polymeric sidechains (B) are not hydrolyzed after polymerization.

Within the context of the present invention, it is preferred that no other monomers besides those as defined

above in connection with the at least one vinyl ester monomer (B1) and the optionally present N-vinylpyrrolidone as optional further monomer (B2) are employed within the respective polymerization process for obtaining the polymeric sidechains (B). However, if any further polymeric monomers besides the monomers according to (B1) and optionally (B2) are present, such monomers (other than B1 and B2) are present in an amount of less than 1wt% of the total amount of monomers employed for obtaining the polymeric sidechains (B). Preferably, the amount of said additional monomers is less than 0.5% by weight, even more preferably less than 0.01% by weight, most preferably, there is a total absence of any additional monomer besides the monomers (B1) and optionally (B2).

Within the present invention, it is particularly preferred that no monomers are employed comprising an acid function. In particular, the monomers employed for obtaining the polymeric sidechains (B) of the graft polymers according to the present invention do not comprise any acid-functional monomers selected from acrylic acid, methacrylic acid, maleic acid, itaconic acid, crotonic acid, vinyl-acetic acid or acryloxy-propionic acid.

Inventive polymers need to have at least one of the following properties, preferably two or more, to be successfully employed in the various fields of applications:

a) Biodegradation of a certain level, such biodegradation being tested as defined elsewhere within this specification. To exhibit a useful biodegradation the percentage of biodegradation (at 28 day according the method disclosed herein) preferably should be at least 20 percent, more preferably at least 40% and even more preferably at least 50%, such as 25, 30, 32, 35, 45, 55, 60, 65, 75, 80, 85 or more up to 100 %;

b) Water-solubility of the polymers should be present to a certain extent, to be able to employ the polymers within the aqueous environment typically present in the fields of applications as generally targeted with this present invention. Preferably inventive polymers should exhibit a medium to good, more preferably a very good solubility in the environment of an aqueous formulation as typically employed in such fields for the various kinds of formulations, e.g. dish washing, automatic dish-washing, hard surface cleaning, fabric cleaning, fabric care, cosmetic formulations, etc.

c) Viscosities of the polymer solutions should be such that at reasonably high solid concentrations of the polymer as to be handled in and after production and to be provided to the user, which could be e.g. as a "pure" (then typically liquid) product, dissolved in a solvent, typically an aqueous solution containing water and organic solvents, only water or only organic solvents, the viscosity of such polymer or polymer solution being in a range that allows typical technical process steps such as pouring, pumping, dosing etc. Hence, the viscosities should be preferably in a range of about up to less than 4000 mPas, more preferably up to 3500 mPas, even more preferably up to 3000 mPas, such as up to 4500, 3750, 3250, 2750 or even 2600 or below such as 2500, 2000, 1750, 1500, 1250, 1000, 750, 500, 250, 200, 150, or 100 mPas, at concentrations of the polymer (based on the solid content of the polymer in solution, as defined by weight percent of the dry polymer within the total weight of the polymer solution) of preferably at least 10 wt.%, more preferably at least 20, and even more preferably at least 40 wt.%, and most preferably at least 50 wt.%, such as at least 60, 70, 80 or even 90 wt.%. The viscosity may be measured at either 25 °C or at elevated temperature, e.g. temperatures of 50 or even 60 °C. By this a suitable handling of the polymer solutions in commercial scales is possible. It is of course evident that depending on the amount of solvent being added the viscosity is lower when the amount of solvent increases and vice versa, thus allowing for adjustment in case desired. It is also evident that the viscosity being measured depends on the temperature at which it is being measured, e.g. the viscosity of a given polymer with a given solid content of e.g. 80 wt.% will be higher when measured at lower temperature and lower when measured at a higher temperature. In a preferred embodiment the solid content is in between 70 and 90 wt.%, more preferably in between 75 and 85 wt.%, with no additional solvent being added but the polymer as prepared. In a more preferred embodiment, the solid content is in between 70 and 90 wt.%, more preferably in between 75 and 85 wt.%, with no additional solvent being added but the polymer as prepared, and the viscosity is lower than 3000 mPas when measured at 60 °C.

To achieve these requirements, the following guidance can be given on how to achieve such properties of the inventive polymers:

Biodegradability increases generally with at least one of the following conditions:

- 1) lower molecular weight of the block copolymer backbone (A) compared to higher molecular weight;
- 2) lower weight percentage of polymeric sidechains (monomer B) being grafted onto the backbone compared to higher weight percentage.
- 3) choosing the backbone structure A2 over A1;
- 4) molar ratio of ethylene oxide moiety to total alkylene oxide moiety present in the backbone (A) of in the range of from about 0.10 to about 0.80.

Preferable properties of the inventive polymers are achieved with at least one of the following conditions:

- 1) block copolymer backbone (A) of the graft polymer has $M_n$ of below 3500 g/mol, more preferably below 3200 g/mol.
- 2) weight percentage of polymeric sidechains of the graft polymers ("SUB") in the range of from about 0.10 to about 0.60, more preferably in the range of from about 0.20 to about 0.50;
- 3) graft polymers has a backbone structure A2;
- 4) molar ratio of ethylene oxide moieties to total alkylene oxide moieties present in the backbone A ("EO"), in the range of from about 0.10 to about 0.80.

More preferable properties of the inventive polymers are achieved with the following combinations of conditions: ("A1", "B1" etc. as being defined before)

- 1)+2), i.e. block copolymer backbone (A) has $M_n$ below 3500 g/mol and weight percentage of polymeric sidechains of the graft polymers ("SUB") the range of from about 0.20 to about 0.50;
- 1)+3)
- 1)+2)+3)
- 1)+2)+3)+4)

Even more preferable properties of the inventive polymers are achieved with the following combinations of conditions:

- 1)+2)
- 1)+2)+3)

The most preferred properties of the inventive polymers are achieved with the following combinations of conditions:

- 1)+2)+3)

In one preferred embodiment of the present invention the graft polymer is a polymer wherein the number average molecular weight $M_n$ of the tri-block copolymer backbone (A) is lower than 6000 g/mol, preferably lower than 5000 g/mol, more preferably lower than 3650 g/mol and even more preferably lower than 3000 g/mol, and the percentage by weight of vinyl acetate (monomer B) being grafted onto the backbone is in between 10 and 80, preferably more than 10 and less than 80, more preferably at least 20, and most preferably at least 30, and preferably less than 70, more preferably less than 60 and most preferably less than 50 (in relation to the total weight of the graft polymer).

In another preferred embodiment of the present invention the graft polymer is a polymer wherein the number average molecular weight $M_n$ of the tri-block copolymer backbone (A) is lower than 6000 g/mol, preferably lower than 5000 g/mol, more preferably lower than 3650 g/mol and even more preferably lower than 3000 g/mol, and most preferably lower than 2500 g/mol, and the backbone has the structure A2, and the percentage by weight of vinyl acetate (monomer B) being grafted onto the backbone is in between 10 and 80, preferably more than 10 and less than 80, more preferably at least 20, and most preferably at least 30, and preferably less than 70, more preferably less than 60 and most preferably less than 50 (in relation to the total weight of the graft polymer).

As further criteria of course the individual performance of a specific polymer needs to be evaluated and thus ranked for each individual formulation in a specific field of application. Due to the broad usefulness of the inventive polymers an exhaustive overview is not possible, but the present specification and examples give a guidance on how to prepare and select useful polymers of desired properties and how to tune the properties to the desired needs. One such criteria for the area of home care and especially fabric care of course it he performance upon washing, e.g. subjecting a certain material exhibiting stains of certain materials to a defined washing procedure. The examples give some guidance for the application for washing of fabrics, i.e. the general area of fabric care.

Depending on the individual needs for a polymer exhibiting a defined degree of biodegradation, water solubility and viscosity (i.e. handling properties) the general and specific teachings herein - without being intended to be limited to the specific examples being given - will guide on how to obtain such polymer.

Another subject-matter of the present invention is a process for preparing the inventive graft polymers as described above. Within this process for obtaining at least one graft polymer according to the present invention, at least one monomer (B1) and optionally N-vinylpyrrolidone as optional monomer (B2) are polymerized in the presence of at least one block copolymer backbone (A).

It has to be noted that the grafting process as such, wherein a polymeric backbone, such as a block copolymer backbone, is grafted with polymeric sidechains, is known to a person skilled in the art. Any process known to the skilled person in this respect can be employed within the present invention.

Within the process of the present invention, it is preferred that the polymeric sidechains (B) are obtained by radical polymerization.

The radical polymerization as such is also known to a skilled person. The person skilled in the art also knows that the inventive process can be carried out in the presence of a radical-forming initial (C) and/or at least one solvent (D). The skilled person knows the respective components as such.

The term "radical polymerization" as used within the context of the present invention comprises besides the free radical polymerization also variants thereof, such as controlled radical polymerization. Suitable control mechanisms are RAFT, NMP or ATRP, which are each known to the skilled person, including suitable control agents.

It is even more preferred that a process according to the present invention is carried out by a method comprising the polymerization of at least one monomer (B1) selected from vinyl acetate, and further vinyl ester besides vinyl acetate, provided that the vinyl ester monomer (B1) comprises at least 50%, by weight of B1 monomers, vinyl acetate, and optionally N-vinylpyrrolidone as optional further monomer (B2) in order to obtain the polymer sidechains (B) in the presence of at least one block copolymer backbone (A), a free radical-forming initiator (C) and, if desired, up to 50% by weight, based on the sum of components (A), (B1), optionally (B2), and (C) of at least one organic solvent (D), at a mean polymerization temperature at which the initiator (C) has a decomposition half-life of from 40 to 500 min, in such a way that the fraction of unconverted graft monomers (B1) and optionally (B2) and initiator (C) in the reaction mixture is constantly kept in a quantitative deficiency relative to the block copolymer backbone (A).

The amount of ((free) radical-forming) initiator (C) is preferably from 0.1 to 5% by weight, in particular from 0.3 to 3.5% by weight, based in each case on the polymeric sidechains (B).

For the process according to the invention, it is preferred that the steady-state concentration of radicals present at the mean polymerization temperature is substantially constant and the graft monomers (B1) or (B2) are present in the reaction mixture constantly only in low concentration (for example of not more than 5% by weight). This allows the reaction to be controlled, and graft polymers can be prepared in a controlled manner with the desired low polydispersity.

The term "mean polymerization temperature" is intended to mean here that, although the process is substantially isothermal, there may, owing to the exothermicity of the reaction, be temperature variations which are preferably kept within the range of +/- 10°C, more preferably in the range of +/- 5°C.

According to the invention, the (radical-forming) initiator (C) at the mean polymerization temperature should have a decomposition half-life of from 40 to 500 min, preferably from 50 to 400 min and more preferably from 60 to 300 min.

According to the invention, the initiator (C) and the graft monomers (B2) and/or (B2) are advantageously added in such a way that a low and substantially constant concentration of undecomposed initiator and graft monomers (B1) and/or (B2) is present in the reaction mixture. The proportion of undecomposed initiator in the overall reaction mixture is preferably ≤ 15% by weight, in particular ≤ 10% by weight, based on the total amount of initiator metered in during the monomer addition.

The mean polymerization temperature is appropriately in the range from 50 to 140°C, preferably from 60 to 120°C and more preferably from 65 to 110°C.

Examples of suitable initiators (C) whose decomposition half-life in the temperature range from 50 to 140°C is from 20 to 500 min are:

- O-$C_2$-$C_{12}$-acylated derivatives of tert-$C_4$-$C_{12}$-alkyl hydroperoxides and tert-($C_9$-$C_{12}$-aralkyl) hydroperoxides, such as tert-butyl peroxyacetate, tert-butyl monoperoxymaleate, tert-butyl peroxyisobutyrate, tert-butyl peroxypivalate, tert-butyl peroxyneoheptanoate, tert-butyl peroxy-2-ethylhexanoate, tert-butyl peroxy-3,5,5-trimethylhexanoate, tert-butyl peroxyneodecanoate, tert-amyl peroxypivalate, tert-amyl peroxy-2-ethylhexanoate, tert-amyl peroxyneodecanoate, 1,1,3,3-tetramethylbutyl peroxyneodecanoate, cumyl peroxyneodecanoate, tert-butyl peroxybenzoate, tert-amyl peroxybenzoate and di-tert-butyl diperoxyphthalate;
- di-O-$C_4$-$C_{12}$-acylated derivatives of tert-$C_8$-$C_{14}$-alkylene bisperoxides, such as 2,5-dimethyl-2,5-di(2-ethylhexanoylperoxy)hexane, 2,5-dimethyl-2,5-di(benzoylperoxy)hexane and 1,3-di(2-neodecanoylperoxyisopropyl)benzene;
- di($C_2$-$C_{12}$-alkanoyl) and dibenzoyl peroxides, such as diacetyl peroxide, dipropionyl peroxide, disuccinyl peroxide, dicapryloyl peroxide, di(3,5,5-trimethylhexanoyl) peroxide, didecanoyl peroxide, dilauroyl peroxide, dibenzoyl peroxide, di(4-methylbenzoyl) peroxide, di(4-chlorobenzoyl) peroxide and di(2,4-dichlorobenzoyl) peroxide;
- tert-$C_4$-$C_5$-alkyl peroxy($C_4$-$C_{12}$-alkyl)carbonates, such as tert-amyl peroxy(2-ethylhexyl)carbonate;
- di($C_2$-$C_{12}$-alkyl) peroxydicarbonates, such as di(n-butyl) peroxydicarbonate and di(2-ethylhexyl) peroxydicarbonate.

Depending on the mean polymerization temperature, examples of particularly suitable initiators (C) are:

- at a mean polymerization temperature of from 50 to 60°C:
tert-butyl peroxyneoheptanoate, tert-butyl peroxyneodecanoate, tert-amyl peroxypivalate, tert-amyl peroxyneodecanoate, 1,1,3,3-tetramethylbutyl peroxyneodecanoate, cumyl peroxyneodecanoate, 1,3-di(2-neodecanoyl peroxyisopropyl)benzene, di(n-butyl) peroxydicarbonate and di(2-ethylhexyl) peroxydicarbonate;
- at a mean polymerization temperature of from 60 to 70°C:
tert-butyl peroxypivalate, tert-butyl peroxyneoheptanoate, tert-butyl peroxyneodecanoate, tert-amyl peroxypivalate and di(2,4-dichlorobenzoyl) peroxide;
- at a mean polymerization temperature of from 70 to 80°C:
tert-butyl peroxypivalate, tert-butyl peroxyneoheptanoate, tert-amyl peroxypivalate, dipropionyl peroxide, dicapryloyl peroxide, didecanoyl peroxide, dilauroyl peroxide, di(2,4-dichlorobenzoyl) peroxide and 2,5-dimethyl-2,5-di(2-ethylhexanoylperoxy)hexane;
- at a mean polymerization temperature of from 80 to 90°C:
tert-butyl peroxyisobutyrate, tert-butyl peroxy-2-ethylhexanoate, tert-amyl peroxy-2-ethylhexanoate, dipropionyl peroxide, dicapryloyl peroxide, didecanoyl peroxide, dilauroyl peroxide, di(3,5,5-trimethylhexanoyl) peroxide, dibenzoyl peroxide and di(4-methylbenzoyl) peroxide;
- at a mean polymerization temperature of from 90 to 100°C:
tert-butyl peroxyisobutyrate, tert-butyl peroxy-2-ethylhexanoate, tert-butyl monoperoxymaleate, tert-amyl peroxy-2-ethylhexanoate, dibenzoyl peroxide and di(4-methylbenzoyl) peroxide;
- at a mean polymerization temperature of from 100 to 110°C:
tert-butyl monoperoxymaleate, tert-butyl peroxyisobutyrate and tert-amyl peroxy(2-ethylhexyl)carbonate;
- at a mean polymerization temperature of from 110 to 120°C:
tert-butyl monoperoxymaleate, tert-butyl peroxy-3,5,5-trimethylhexanoate and tert-amyl peroxy(2-ethylhexyl)carbonate.

Preferred initiators (C) are O-$C_4$-$C_{12}$-acylated derivatives of tert-$C_4$-$C_5$-alkyl hydroperoxides, particular preference being given to tert-butyl peroxypivalate and tert-butyl peroxy-2-ethylhexanoate.

Particularly advantageous polymerization conditions can be established effortlessly by precise adjustment of initiator (C) and polymerization temperature. For instance, the preferred mean polymerization temperature in the case of use of tert-butyl peroxypivalate is from 60 to 80°C, and, in the case of tert-butyl peroxy-2-ethylhexanoate, from 80 to 100°C.

The inventive polymerization reaction can be carried out in the presence of, preferably small amounts of, an organic solvent (D). It is of course also possible to use mixtures of different solvents (D). Preference is given to using water-soluble or water-miscible solvents.

When a solvent (D) is used as a diluent, generally from 1 to 40% by weight, preferably from 1 to 35% by weight, more preferably from 1.5 to 30% by weight, most preferably from 2 to 25% by weight, based in each case on the sum of the components (A), (B1), optionally (B2), and (C), are used.

Examples of suitable solvents (D) include:

- monohydric alcohols, preferably aliphatic $C_1$-$C_{16}$-alcohols, more preferably aliphatic $C_2$-$C_{12}$-alcohols, most preferably $C_2$-$C_4$-alcohols, such as ethanol, propanol, isopropanol, butanol, sec-butanol and tert-butanol;
- polyhydric alcohols, preferably $C_2$-$C_{10}$-diols, more preferably $C_2$-$C_6$-diols, most preferably $C_2$-$C_4$-alkylene glycols, such as ethylene glycol, 1,2-propylene glycol and 1,3-propylene glycol;
- alkylene glycol ethers, preferably alkylene glycol mono($C_1$-$C_{12}$-alkyl) ethers and alkylene glycol di($C_1$-$C_6$-alkyl) ethers, more preferably alkylene glycol mono- and di($C_1$-$C_2$-alkyl) ethers, most preferably alkylene glycol mono($C_1$-$C_2$-alkyl) ethers, such as ethylene glycol monomethyl and -ethyl ether and propylene glycol monomethyl and -ethyl ether;
- polyalkylene glycols, preferably poly($C_2$-$C_4$-alkylene) glycols having 2-20 $C_2$-$C_4$-alkylene glycol units, more preferably polyethylene glycols having 2-20 ethylene glycol units and polypropylene glycols having 2-10 propylene glycol units, most preferably polyethylene glycols having 2-15 ethylene glycol units and polypropylene glycols having 2-4 propylene glycol units, such as diethylene glycol, triethylene glycol, dipropylene glycol and tripropylene glycol;
- polyalkylene glycol monoethers, preferably poly($C_2$-$C_4$-alkylene) glycol mono($C_1$-$C_{25}$-alkyl) ethers having 2-20 alkylene glycol units, more preferably poly($C_2$-$C_4$-alkylene) glycol mono($C_1$-$C_{20}$-alkyl) ethers having 2-20 alkylene glycol units, most preferably poly($C_2$-$C_3$-alkylene) glycol mono($C_1$-$C_{16}$-alkyl) ethers having 3-20 alkylene glycol units;
- carboxylic esters, preferably $C_1$-$C_8$-alkyl esters of $C_1$-$C_6$-carboxylic acids, more preferably $C_1$-$C_4$-alkyl esters of $C_1$-$C_3$-carboxylic acids, most preferably $C_2$-$C_4$-alkyl esters of $C_2$-$C_3$-carboxylic acids, such as ethyl acetate and ethyl propionate;
- aliphatic ketones which preferably have from 3 to 10 carbon atoms, such as acetone, methyl ethyl ketone, diethyl ketone and cyclohexanone;

- cyclic ethers, in particular tetrahydrofuran and dioxane.

The solvents (D) are advantageously those solvents, which are also used to formulate the inventive graft polymers for use (for example in washing and cleaning compositions) and can therefore remain in the polymerization product.

Preferred examples of these solvents are polyethylene glycols having 2-15 ethylene glycol units, polypropylene glycols having 2-6 propylene glycol units and in particular alkoxylation products of $C_6$-$C_8$-alcohols (alkylene glycol monoalkyl ethers and polyalkylene glycol monoalkyl ethers).

Particular preference is given here to alkoxylation products of $C_8$-$C_{16}$-alcohols with a high degree of branching, which allow the formulation of polymer mixtures which are free-flowing at 40-70°C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1-15 mol of ethylene oxide, $C_{13}$/$C_{15}$ oxo alcohol or $C_{12}$/$C_{14}$ or $C_{16}$/$C_{18}$ fatty alcohol alkoxylated with 1-15 mol of ethylene oxide and 1-3 mol of propylene oxide, preference being given to 2-propylheptanol alkoxylated with 1-15 mol of ethylene oxide and 1-3 mol of propylene oxide.

In the process according to the invention, block copolymer backbone (A), graft monomer (B1) and, if appropriate, (B2), initiator (C) and, if appropriate, solvent (D) are usually heated to the selected mean polymerization temperature in a reactor.

According to the invention, the polymerization is carried out in such a way that an excess of polymer (block copolymer backbone (A) and formed graft polymer (B)) is constantly present in the reactor. The quantitative ratio of polymer to ungrafted monomer and initiator is generally ≥ 10:1, preferably ≥ 15:1 and more preferably ≥ 20:1.

The polymerization process according to the invention can in principle be carried out in various reactor types.

The reactor used is preferably a stirred tank in which the block copolymer backbone (A), if appropriate together with portions, of generally up to 15% by weight of the particular total amount, of graft monomers (B1) or (B2), initiator (C) and solvent (D), are initially charged fully or partly and heated to the polymerization temperature, and the remaining amounts of (B), (C) and, if appropriate, (D) are metered in, preferably separately. The remaining amounts of (B), (C) and, if appropriate, (D) are metered in preferably over a period of ≥ 2 h, more preferably of ≥ 4 h and most preferably of ≥ 5 h.

In the case of the particularly preferred, substantially solvent-free process variant, the entire amount of block copolymer backbone (A) is initially charged as a melt and the graft monomers (B1) and, if appropriate, (B2), and also the initiator (C) present preferably in the form of a from 10 to 50% by weight solution in one of the solvents (D), are metered in, the temperature being controlled such that the selected polymerization temperature, on average during the polymerization, is maintained with a range of especially +/- 10°C, in particular +/- 5°C.

In a further particularly preferred, low-solvent process variant, the procedure is as described above, except that solvent (D) is metered in during the polymerization in order to limit the viscosity of the reaction mixture. It is also possible to commence with the metered addition of the solvent only at a later time with advanced polymerization, or to add it in portions.

The polymerization can be affected under standard pressure or at reduced or elevated pressure. When the boiling point of the monomers (B1) or (B2) or of any diluent (D) used is exceeded at the selected pressure, the polymerization is carried out with reflux cooling.

Another subject-matter of the present invention is the use of at least one graft polymer as described above in laundry detergents, in cleaning compositions and/or in fabric and home care products.

A further subject-matter of the present invention is a fabric and home care product comprising a graft polymer described above. The product can be a laundry detergent, a dish-washing detergent, a cleaning composition and/or a fabric and home care product containing at least one graft polymer as described above.

Laundry detergents, cleaning compositions and/or fabric and home care products as such are known to a person skilled in the art. Any composition etc. known to a person skilled in the art, in connection with the respective use, can be employed within the context of the present invention.

The laundry detergent, the cleaning composition and/or the fabric and home care product according to the present invention are preferred, wherein the at least one graft polymer is present in an amount ranging from about 0.01% to about 20%, preferably from about 0.05% to 15%, more preferably from about 0.1% to about 10%, and most preferably from about 0.5% to about 5%, in relation to the total weight of such composition or product.

**Laundry detergent composition:** Suitable laundry detergent compositions include laundry detergent powder compositions, laundry detergent liquid compositions, laundry detergent gel compositions, and water-soluble laundry detergent compositions.

**Dish-washing detergent composition:** Suitable dish-washing detergent compositions include hand dish-washing detergent compositions and automatic dish-washing detergent compositions.

**Surfactant System:** The compositions comprise a surfactant system in an amount sufficient to provide desired

cleaning properties. In some embodiments, the composition comprises, by weight of the composition, from about 1% to about 70% of a surfactant system. In other embodiments, the liquid composition comprises, by weight of the composition, from about 2% to about 60% of the surfactant system. In further embodiments, the composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

**Anionic Surfactants:** In some examples, the surfactant system of the composition may comprise from about 1% to about 70%, by weight of the surfactant system, of one or more anionic surfactants. In other examples, the surfactant system of the composition may comprise from about 2% to about 60%, by weight of the surfactant system, of one or more anionic surfactants. In further examples, the surfactant system of the composition may comprise from about 5% to about 30%, by weight of the surfactant system, of one or more anionic surfactants. In further examples, the surfactant system may consist essentially of, or even consist of one or more anionic surfactants.

Specific, non-limiting examples of suitable anionic surfactants include any conventional anionic surfactant. This may include a sulfate detersive surfactant, for e.g., alkoxylated and/or non-alkoxylated alkyl sulfate materials, and/or sulfonic detersive surfactants, e.g., alkyl benzene sulfonates.

Other useful anionic surfactants can include the alkali metal salts of alkyl benzene sulfonates, in which the alkyl group contains from about 9 to about 15 carbon atoms, in straight chain (linear) or branched chain configuration.

Suitable alkyl benzene sulphonate (LAS) may be obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be suitable. In one aspect a magnesium salt of LAS is used.

The detersive surfactant may be a mid-chain branched detersive surfactant, in one aspect, a mid-chain branched anionic detersive surfactant, in one aspect, a mid-chain branched alkyl sulphate and/or a mid-chain branched alkyl benzene sulphonate, for example, a mid-chain branched alkyl sulphate. In one aspect, the mid-chain branches are $C_{1-4}$ alkyl groups, typically methyl and/or ethyl groups.

Other anionic surfactants useful herein are the water-soluble salts of: paraffin sulfonates and secondary alkane sulfonates containing from about 8 to about 24 (and in some examples about 12 to 18) carbon atoms; alkyl glyceryl ether sulfonates, especially those ethers of $C_{8-18}$ alcohols (e.g., those derived from tallow and coconut oil). Mixtures of the alkylbenzene sulfonates with the above-described paraffin sulfonates, secondary alkane sulfonates and alkyl glyceryl ether sulfonates are also useful. Further suitable anionic surfactants include methyl ester sulfonates and alkyl ether carboxylates.

The anionic surfactants may exist in an acid form, and the acid form may be neutralized to form a surfactant salt. Typical agents for neutralization include metal counterion bases, such as hydroxides, e.g., NaOH or KOH. Further suitable agents for neutralizing anionic surfactants in their acid forms include ammonia, amines, or alkanolamines. Non-limiting examples of alkanolamines include monoethanolamine, diethanolamine, triethanolamine, and other linear or branched alkanolamines known in the art; suitable alkanolamines include 2-amino-1-propanol, 1-aminopropanol, monoisopropanolamine, or 1-amino-3-propanol. Amine neutralization may be done to a full or partial extent, e.g., part of the anionic surfactant mix may be neutralized with sodium or potassium and part of the anionic surfactant mix may be neutralized with amines or alkanolamines.

**Nonionic surfactants:** The surfactant system of the composition may comprise a nonionic surfactant. In some examples, the surfactant system comprises up to about 25%, by weight of the surfactant system, of one or more nonionic surfactants, e.g., as a co-surfactant. In some examples, the compositions comprises from about 0.1% to about 15%, by weight of the surfactant system, of one or more nonionic surfactants. In further examples, the compositions comprises from about 0.3% to about 10%, by weight of the surfactant system, of one or more nonionic surfactants.

Suitable nonionic surfactants useful herein can comprise any conventional nonionic surfactant. These can include, for e.g., alkoxylated fatty alcohols and amine oxide surfactants.

Other non-limiting examples of nonionic surfactants useful herein include: $C_8$-$C_{18}$ alkyl ethoxylates, such as, NEODOL® nonionic surfactants from Shell; $C_6$-$C_{12}$ alkyl phenol alkoxylates wherein the alkoxylate units may be ethyleneoxy units, propyleneoxy units, or a mixture thereof; $C_{12}$-$C_{18}$ alcohol and $C_6$-$C_{12}$ alkyl phenol condensates with ethylene oxide/propylene oxide block polymers such as Pluronic® from BASF; $C_{14}$-$C_{22}$ mid-chain branched alcohols (BA); $C_{14}$-$C_{22}$ mid-chain branched alkyl alkoxylates ($BAE_x$), wherein x is from 1 to 30; alkylpolysaccharides; specifically alkylpolyglycosides; Polyhydroxy fatty acid amides; and ether capped poly(oxyalkylated) alcohol surfactants.

Suitable nonionic detersive surfactants also include alkyl polyglucoside and alkyl alkoxylated alcohol. Suitable nonionic surfactants also include those sold under the tradename Lutensol® from BASF.

**Anionic/Nonionic Combinations:** The surfactant system may comprise combinations of anionic and nonionic surfactant materials. In some examples, the weight ratio of anionic surfactant to nonionic surfactant is at least about 2:1. In other examples, the weight ratio of anionic surfactant to nonionic surfactant is at least about 5:1. In further examples, the weight ratio of anionic surfactant to nonionic surfactant is at least about 10:1.

**Cationic Surfactants:** The surfactant system may comprise a cationic surfactant. In some aspects, the surfactant system comprises from about 0% to about 7%, or from about 0.1% to about 5%, or from about 1% to about 4%, by weight of the surfactant system, of a cationic surfactant, e.g., as a co-surfactant. In some aspects, the compositions of the invention are substantially free of cationic surfactants and surfactants that become cationic below a pH of 7 or below a pH of 6. Non-limiting examples of cationic surfactants include: the quaternary ammonium surfactants, which can have up to 26 carbon atoms include: alkoxylate quaternary ammonium (AQA) surfactants; dimethyl hydroxyethyl quaternary ammonium; dimethyl hydroxyethyl lauryl ammonium chloride; polyamine cationic surfactants; cationic ester surfactants; and amino surfactants, specifically amido propyldimethyl amine (APA).

Suitable cationic detersive surfactants also include alkyl pyridinium compounds, alkyl quaternary ammonium compounds, alkyl quaternary phosphonium compounds, alkyl ternary sulphonium compounds, and mixtures thereof.

**Zwitterionic Surfactants:** Examples of zwitterionic surfactants include: derivatives of secondary and tertiary amines, derivatives of heterocyclic secondary and tertiary amines, or derivatives of quaternary ammonium, quaternary phosphonium or tertiary sulfonium compounds. Betaines, including alkyl dimethyl betaine and cocodimethyl amidopropyl betaine, $C_8$ to $C_{18}$ (for example from $C_{12}$ to $C_{18}$) amine oxides and sulfo and hydroxy betaines, such as N-alkyl-N,N-dimethylammino-1-propane sulfonate where the alkyl group can be $C_8$ to $C_{18}$ and in certain embodiments from $C_{10}$ to $C_{14}$.

**Amphoteric Surfactants:** Examples of amphoteric surfactants include aliphatic derivatives of secondary or tertiary amines, or aliphatic derivatives of heterocyclic secondary and tertiary amines in which the aliphatic radical may be straight- or branched-chain and where one of the aliphatic substituents contains at least about 8 carbon atoms, typically from about 8 to about 18 carbon atoms, and at least one of the aliphatic substituents contains an anionic water-solubilizing group, e.g. carboxy, sulfonate, sulfate. Examples of compounds falling within this definition are sodium 3-(dodecylamino)propionate, sodium 3-(dodecylamino) propane-1-sulfonate, sodium 2-(dodecylamino)ethyl sulfate, sodium 2-(dimethylamino) octadecanoate, disodium 3-(N-carboxymethyldodecylamino)propane 1-sulfonate, disodium octadecyl-imminodiacetate, sodium 1-carboxymethyl-2-undecylimidazole, and sodium N,N-bis (2-hydroxyethyl)-2-sulfato-3-dodecoxypropylamine. Suitable amphoteric surfactants also include sarcosinates, glycinates, taurinates, and mixtures thereof.

**Branched Surfactants:** Suitable branched detersive surfactants include anionic branched surfactants selected from branched sulphate or branched sulphonate surfactants, e.g., branched alkyl sulphate, branched alkyl alkoxylated sulphate, and branched alkyl benzene sulphonates, comprising one or more random alkyl branches, e.g., $C_{1-4}$ alkyl groups, typically methyl and/or ethyl groups.

The branched detersive surfactant may be a mid-chain branched detersive surfactant, typically, a mid-chain branched anionic detersive surfactant, for example, a mid-chain branched alkyl sulphate and/or a mid-chain branched alkyl benzene sulphonate. In some aspects, the detersive surfactant is a mid-chain branched alkyl sulphate. In some aspects, the mid-chain branches are $C_{1-4}$ alkyl groups, typically methyl and/or ethyl groups.

Further suitable branched anionic detersive surfactants include surfactants derived from alcohols branched in the 2-alkyl position, such as those sold under the trade names Isalchem®123, Isalchem®125, Isalchem®145, Isalchem®167, which are derived from the oxo process. Due to the oxo process, the branching is situated in the 2-alkyl position. These 2-alkyl branched alcohols are typically in the range of C11 to C14/C15 in length and comprise structural isomers that are all branched in the 2-alkyl position.

**Adjunct Cleaning Additives:** The compositions of the invention may also contain adjunct cleaning additives. Suitable adjunct cleaning additives include builders, structurants or thickeners, clay soil removal/anti-redeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds supressors, softeners, and perfumes.

**Enzymes:** The compositions described herein may comprise one or more enzymes which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, ß-glucanases, arabinosidases, hyaluronidase, chondroitinase, laccase, and amylases, or mixtures thereof. A typical combination is an enzyme cocktail that may comprise, for example, a protease and lipase in conjunction with amylase. When present in a composition, the aforementioned additional enzymes may be present at levels from about 0.00001% to about 2%, from about 0.0001% to about 1% or even from about 0.001% to about 0.5% enzyme protein by weight of the composition.

In one aspect preferred enzymes would include a protease. Suitable proteases include metalloproteases and serine proteases, including neutral or alkaline microbial serine proteases, such as subtilisins (EC 3.4.21.62). Suitable

proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:

(a) subtilisins (EC 3.4.21.62), including those derived from Bacillus, such as Bacillus lentus, B. alkalophilus, B. subtilis, B. amyloliquefaciens, Bacillus pumilus and Bacillus gibsonii.
(b) trypsin-type or chymotrypsin-type proteases, such as trypsin (e.g., of porcine or bovine origin), including the Fusarium protease and the chymotrypsin proteases derived from Cellumonas.
(c) metalloproteases, including those derived from Bacillus amyloliquefaciens.

Preferred proteases include those derived from Bacillus gibsonii or Bacillus Lentus.

Suitable commercially available protease enzymes include those sold under the trade names Alcalase®, Savinase®, Primase®, Durazym®, Polarzyme®, Kannase®, Liquanase®, Liquanase Ultra®, Savinase Ultra®, Ovozyme®, Neutrase®, Everlase® and Esperase® by Novozymes A/S (Denmark), those sold under the tradename Maxatase®, Maxacal®, Maxapem®, Properase®, Purafect®, Purafect Prime®, Purafect Ox®, FN3® , FN4®, Excellase® and Purafect OXP® by Genencor International, those sold under the tradename Opticlean® and Optimase® by Solvay Enzymes, those available from Henkel/ Kemira, namely BLAP with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

Suitable alpha-amylases include those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, DSM 9375, DSM 12368, DSMZ no. 12649, KSM AP1378, KSM K36 or KSM K38.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL® and BAN® (Novozymes A/S, Bagsvaerd, Denmark), KEMZYM® AT 9000 Biozym Biotech Trading GmbH Wehlistrasse 27b A-1200 Wien Austria, RAPIDASE® , PURASTAR®, ENZYSIZE®, OPTISIZE HT PLUS®, POWERASE® and PURASTAR OXAM® (Genencor International Inc., Palo Alto, California) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS® and mixtures thereof.

In one aspect, such enzymes may be selected from the group consisting of: lipases, including "first cycle lipases". In one aspect, the lipase is a first-wash lipase, preferably a variant of the wild-type lipase from Thermomyces lanuginosus comprising one or more of the T231R and N233R mutations. The wild-type sequence is the 269 amino acids (amino acids 23 - 291) of the Swissprot accession number Swiss-Prot 059952 (derived from Thermomyces lanuginosus (Humicola lanuginosa)). Preferred lipases would include those sold under the tradenames Lipex® and Lipolex®.

In one aspect, other preferred enzymes include microbial-derived endoglucanases exhibiting endo-beta-1,4-glucanase activity (E.C. 3.2.1.4) and mixtures thereof. Suitable endoglucanases are sold under the tradenames Celluclean® and Whitezyme® (Novozymes A/S, Bagsvaerd, Denmark).

Other preferred enzymes include pectate lyases sold under the tradenames Pectawash®, Pectaway®, Xpect® and mannanases sold under the tradenames Mannaway® (all from Novozymes A/S, Bagsvaerd, Denmark), and Purabrite® (Genencor International Inc., Palo Alto, California).

**Enzyme Stabilizing System:** The enzyme-containing compositions described herein may optionally comprise from about 0.001% to about 10%, in some examples from about 0.005% to about 8%, and in other examples, from about 0.01% to about 6%, by weight of the composition, of an enzyme stabilizing system. The enzyme stabilizing system can be any stabilizing system which is compatible with the detersive enzyme. In the case of aqueous detergent compositions comprising protease, a reversible protease inhibitor, such as a boron compound, including borate, 4-formyl phenylboronic acid, phenylboronic acid and derivatives thereof, or compounds such as calcium formate, sodium formate and 1,2-propane diol may be added to further improve stability.

**Builders:** The compositions of the present invention may optionally comprise a builder. Built compositions typically comprise at least about 1% builder, based on the total weight of the composition. Liquid compositions may comprise up to about 10% builder, and in some examples up to about 8% builder, of the total weight of the composition. Granular compositions may comprise up to about 30% builder, and in some examples up to about 5% builder, by weight of the composition.

Builders selected from aluminosilicates (e.g., zeolite builders, such as zeolite A, zeolite P, and zeolite MAP) and silicates assist in controlling mineral hardness in wash water, especially calcium and/or magnesium, or to assist in

the removal of particulate soils from surfaces. Suitable builders may be selected from the group consisting of phosphates, such as polyphosphates (e.g., sodium tri-polyphosphate), especially sodium salts thereof; carbonates, bicarbonates, sesquicarbonates, and carbonate minerals other than sodium carbonate or sesquicarbonate; organic mono-, di-, tri-, and tetracarboxylates, especially water-soluble nonsurfactant carboxylates in acid, sodium, potassium or alkanolammonium salt form, as well as oligomeric or water-soluble low molecular weight polymer carboxylates including aliphatic and aromatic types; and phytic acid. These may be complemented by borates, e.g., for pH-buffering purposes, or by sulfates, especially sodium sulfate and any other fillers or carriers which may be important to the engineering of stable surfactant and/or builder-containing compositions. Additional suitable builders may be selected from citric acid, lactic acid, fatty acid, polycarboxylate builders, for example, copolymers of acrylic acid, copolymers of acrylic acid and maleic acid, and copolymers of acrylic acid and/or maleic acid, and other suitable ethylenic monomers with various types of additional functionalities. Also suitable for use as builders herein are synthesized crystalline ion exchange materials or hydrates thereof having chain structure and a composition represented by the following general anhydride form: $x(M_2O) \cdot ySiO_2 \cdot zM'O$ wherein M is Na and/or K, M' is Ca and/or Mg; y/x is 0.5 to 2.0; and z/x is 0.005 to 1.0.

Alternatively, the composition may be substantially free of builder.

**Structurant** / **Thickeners:** Suitable structurant / thickeners include:

i. Di-benzylidene Polyol Acetal Derivative
ii. Bacterial Cellulose
iii. Coated Bacterial Cellulose
iv. Cellulose fibers non-bacterial cellulose derived
v. Non-Polymeric Crystalline Hydroxyl-Functional Materials
vi. Polymeric Structuring Agents
vii. Di-amido-gellants
viii. Any combination of above.

**Polymeric Dispersing Agents:** The composition may comprise one or more polymeric dispersing agents. Examples are carboxymethylcellulose, poly(vinyl-pyrrolidone), poly (ethylene glycol), poly(vinyl alcohol), poly(vinylpyridine-N-oxide), poly(vinylimidazole), polycarboxylates such as polyacrylates, maleic/acrylic acid copolymers and lauryl methacrylate/acrylic acid copolymers.

The composition may comprise one or more amphiphilic cleaning polymers such as the compound having the following general structure: $bis((C_2H_5O)(C_2H_4O)n)(CH_3)\text{-}N^+\text{-}C_xH_{2x}\text{-}N^+\text{-}(CH_3)\text{-}bis((C_2H_5O)(C_2H_4O)n)$, wherein n = from 20 to 30, and x = from 3 to 8, or sulphated or sulphonated variants thereof.

The composition may comprise amphiphilic alkoxylated grease cleaning polymers which have balanced hydrophilic and hydrophobic properties such that they remove grease particles from fabrics and surfaces. Specific embodiments of the amphiphilic alkoxylated grease cleaning polymers of the present invention comprise a core structure and a plurality of alkoxylate groups attached to that core structure. These may comprise alkoxylated polyalkylenimines, for example, having an inner polyethylene oxide block and an outer polypropylene oxide block.

Alkoxylated polyamines may be used for grease and particulate removal. Such compounds may include, but are not limited to, ethoxylated polyethyleneimine, ethoxylated hexamethylene diamine, and sulfated versions thereof. Polypropoxylated derivatives may also be included. A wide variety of amines and polyalkyeneimines can be alkoxylated to various degrees. A useful example is 600g/mol polyethyleneimine core ethoxylated to 20 EO groups per NH and is available from BASF.

The composition may comprise random graft polymers comprising a hydrophilic backbone comprising monomers, for example, unsaturated $C_1$-$C_6$ carboxylic acids, ethers, alcohols, aldehydes, ketones, esters, sugar units, alkoxy units, maleic anhydride, saturated polyalcohols such as glycerol, and mixtures thereof; and hydrophobic side chain(s), for example, one or more $C_4$-$C_{25}$ alkyl groups, polypropylene, polybutylene, vinyl esters of saturated $C_1$-$C_6$ monocarboxylic acids, $C_1$-$C_6$ alkyl esters of acrylic or methacrylic acid, and mixtures thereof. A specific example of such graft polymers based on polyalkylene oxides and vinyl esters, in particular vinyl acetate. These polymers are typically prepared by polymerizing the vinyl ester in the presence of the polyalkylene oxide, the initiator used being dibenzoyl peroxide, dilauroyl peroxide or diacetyl peroxide.

The composition may comprise blocks of ethylene oxide, propylene oxide. Examples of such block polymers include ethylene oxide-propylene oxide-ethylene oxide (EO/PO/EO) triblock copolymer, wherein the copolymer comprises a first EO block, a second EO block and PO block wherein the first EO block and the second EO block are linked to the PO block. Blocks of ethylene oxide, propylene oxide, butylene oxide can also be arranged in other ways, such as (EO/PO) deblock copolymer, (PO/EO/PO) triblock copolymer. The block polymers may also contain additional butylene oxide (BO) block.

Carboxylate polymer - The composition of the present invention may also include one or more carboxylate polymers such as a maleate/acrylate random copolymer or polyacrylate homopolymer. In one aspect, the carboxylate

polymer is a polyacrylate homopolymer having a molecular weight of from 4,000 Da to 9,000 Da, or from 6,000 Da to 9,000 Da.

**Soil Release Polymer:** The compositions described herein may include from about 0.01% to about 10.0%, typically from about 0.1% to about 5%, in some aspects from about 0.2% to about 3.0%, by weight of the composition, of a soil release polymer (also known as a polymeric soil release agents or "SRA").

Soil release polymers typically have hydrophilic segments to hydrophilize the surface of hydrophobic fibers (such as polyester and nylon), and hydrophobic segments to deposit on hydrophobic fibers and remain adhered thereto through completion of washing and rinsing cycles, thereby serving as an anchor for the hydrophilic segments. This may enable stains occurring subsequent to treatment with a soil release agent to be more easily cleaned in later washing procedures. It is also believed that facilitating the release of soils helps to improve or maintain the wicking properties of a fabric.

The structure and charge distribution of the soil release polymer may be tailored for application to different fibers or textile types and for formulation in different detergent or detergent additive products. Soil release polymers may be linear, branched, or star-shaped.

Soil release polymers may also include a variety of charged units (e.g., anionic or cationic units) and/or non-charged (e.g., nonionic) monomer units. Typically, a nonionic SRP may be particularly preferred when the SRP is used in combination with a cationic fabric conditioning active, such as a quaternary ammonium ester compound, in order to avoid potentially negative interactions between the SRP and the cationic active.

Soil release polymer may include an end capping moiety, which is especially effective in controlling the molecular weight of the polymer or altering the physical or surface-active properties of the polymer.

One preferred class of suitable soil release polymers include terephthalate-derived polyester polymers, which comprise structure unit (I) and/or (II):

(I) $-[(OCHR^1-CHR^2)_a-O-OC-Ar-CO-]_d$

(II) $-[(OCHR^3-CHR^4)_b-O-OC-sAr-CO-]_e$

wherein:

- a, b are from 1 to 200;
- d, e are from 1 to 50;
- Ar is a 1,4-substituted phenylene;
- sAr is 1,3-substituted phenylene substituted in position 5 with $SO_3M$;
- M is a counterion selected from Na, Li, K, Mg/2, Ca/2, Al/3, ammonium, mono-, di-, tri-, or tetraalkylammonium wherein the alkyl groups are $C_1$-$C_{18}$ alkyl or $C_2$-$C_{10}$ hydroxyalkyl, or mixtures thereof;
- $R^1$, $R^2$, $R^3$, $R^4$ are independently selected from H or $C_1$-$C_{18}$ n-alkyl or iso-alkyl;

Optionally, the polymer further comprises one or more terminal group (III) derived from polyalkylene glycolmonoalkylethers, preferably selected from structure (IV-a)

$$-O-[C_2H_4-O]_c-[C_3H_6-O]_d-[C_4H_8-O]_e-R_7 \quad \text{(IV-a)}$$

wherein:

| | |
|---|---|
| $R_7$ | is a linear or branched $C_{1-30}$ alkyl, $C_2$-$C_{30}$ alkenyl, or a cycloalkyl group with 5 to 9 carbon atoms, or a Cs-Cso aryl group, or a $C_6$-$C_{30}$ arylalkyl group; preferably $C_{1-4}$ alkyl, more preferably methyl; and |
| c, d and e | are, based on molar average, a number independently selected from 0 to 200, where the sum of c+d+e is from 2 to 500, |

wherein the $[C_2H_4-O]$, $[C_3H_6-O]$ and $[C_4H_8-O]$ groups of the terminal group (IV-a) may be arranged blockwise, alternating, periodically and/or statistically, preferably blockwise and/or statistically, either of the $[C_2H_4-O]$, $[C_3H_6-O]$ and $[C_4H_8-O]$ groups of the terminal group (IV-a) can be linked to $-R_7$ and/or -O.

Optionally, the polymer further comprises one or more anionic terminal unit (IV) and/or (V) as described in EP3222647. Where M is a counterion selected from Na, Li, K, Mg/2, Ca/2, Al/3, ammonium, mono-, di-, tri-, or tetraalkylammonium wherein the alkyl groups are C1-C18 alkyl or C2-C10 hydroxyalkyl, or mixtures thereof.

$$-O-CH_2CH_2-SO_3M \quad \text{(IV)}$$

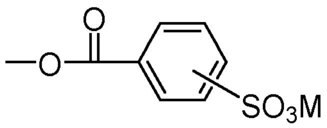

(V)

Optionally, the polymer may comprise crosslinking multifunctional structural unit which having at least three functional groups capable of the esterification reaction. The functional which may be for example acid -, alcohol -, ester -, anhydride - or epoxy groups, etc.

Optionally, the polymer may comprise other di- or polycarboxylic acids or their salts or their (di)alkylesters can be used in the polyesters of the invention, such as, naphthalene-1,4-dicarboxylic acid, naphthalene-2,6,-dicarboxylic acid, tetrahydrophthalic acid, trimellitic acid, diphenoxyethane-4,4'-dicarboxylic acid, diphenyl-4,4'-dicarboxylic acid, 2,5-furandicarboxylic acid, adipic acid, sebacic acid, decan-1,10-dicarboxylic acid, fumaric acid, succinic acid, 1,4-cyclohexanedicarboxylic acid, cyclohexanediacetic acid, glutaric acid, azelaic acid, or their salts or their (di)alkyl esters, preferably their ($C_1$-$C_4$)-(di)alkyl esters and more preferably their (di)methyl esters, or mixtures thereof.

Preferably, suitable terephthalate-derived soil release polymers are nonionic, which does not comprise above structure (II). A further particular preferred nonionic terephthalate-derived soil release polymer has a structure according to formula below:

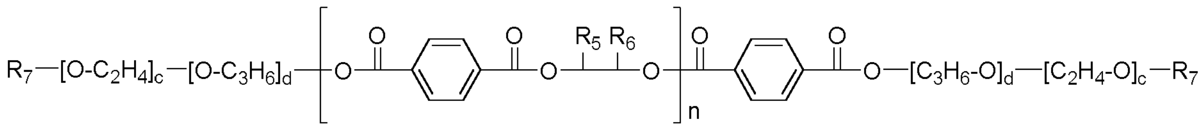

wherein:

| | |
|---|---|
| $R_5$ and $R_6$ | is independently selected from H or $CH_3$. More preferably, one of the $R_5$ and $R_6$ is H, and another is $CH_3$. |
| c, d | are, based on molar average, a number independently selected from 0 to 200, where the sum of c+d is from 2 to 400, More preferably, d is from 0 to 50, c is from 1 to 200, More preferably, d is 1 to 10, c is 5 to 150, |
| $R_7$ | is $C_{1-4}$ alkyl and more preferably methyl, |
| n | is, based on molar average, from 1 to 50. |

One example of most preferred above suitable terephthalate-derived soil release polymers has one of the $R_5$ and $R_6$ is H, and another is $CH_3$; d is 0; c is from 5-100 and $R_7$ is methyl.

Suitable terephthalate-derived soil release polymers may be also described as sulphonated and unsulphonated PET/POET (polyethylene terephthalate / polyoxyethylene terephthalate) polymers, both end-capped and non-end-capped. Example of suitable soil release polymers include TexCare® polymers, including TexCare® SRA-100, SRA-300, SRN-100, SRN-170, SRN-240, SRN-260, SRN-300, and SRN-325, supplied by Clariant.

Other suitable terephthalate-derived soil release polymers are described in patent WO2014019903, WO2014019658 and WO2014019659.

Another class of soil release polymer also include modified cellulose. Suitable modified cellulose may include nonionic modified cellulose derivatives such as cellulose alkyl ether and cellulose hydroxyalkyl ethers. Example of such cellulose alkyl ether and cellulose hydroxyalkyl ethers include methyl cellulose, ethyl cellulose, hydroxyethyl cellulose, hydroxypropyl cellulose, hydroxypropyl methylcellulose, hydroxybutyl methyl cellulose. In some embodiment, the modified cellulose may comprise hydrocarbon of $C_4$ or above, preferred length of the alkyl group maybe $C_4$, $C_6$, $C_8$, $C_{10}$, $C_{12}$, $C_{14}$, $C_{16}$, $C_{18}$; example of suitable modified cellulose are described in WO2019111948 and WO2019111949. In some embodiment, the modified cellulose may comprise additional cationic modification, example of suitable modified cellulose with additional cationic modification are described in WO2019111946 and WO2019111947.

Other examples of commercial soil release polymers are the REPEL-O-TEX® line of polymers supplied by Rhodia, including REPEL-O-TEX® SF, SF-2, and SRP6. Other suitable soil release polymers are Marloquest® polymers, such as Marloquest® SL, HSCB, L235M, B, and G82, supplied by Sasol. Further suitable soil release polymers of a different type include the commercially available material ZELCON 5126 (from DuPont) and MILEASE T (from ICI), Sorez 100 (from ISP).

**Cellulosic Polymer:** The compositions described herein may include from about 0.1% to about 10%, typically from about 0.5% to about 7%, in some aspects from about 3% to about 5%, by weight of the composition, of a cellulosic polymer.

Suitable cellulosic polymers include alkyl cellulose, alkylalkoxyalkyl cellulose, carboxyalkyl cellulose, and alkyl

carboxyalkyl cellulose. In some aspects, the cellulosic polymer is selected from carboxymethyl cellulose, methyl cellulose, methyl hydroxyethyl cellulose, methyl carboxymethyl cellulose, or mixtures thereof. In certain aspects, the cellulosic polymer is a carboxymethyl cellulose having a degree of carboxymethyl substitution of from about 0.5 to about 0.9 and a molecular weight from about 100,000 Da to about 300,000 Da.

Carboxymethylcellulose polymers include Finnfix® GDA (sold by CP Kelko), a hydrophobically modified carboxymethylcellulose, e.g., the alkyl ketene dimer derivative of carboxymethylcellulose sold under the tradename Finnfix® SH1 (CP Kelko), or the blocky carboxymethylcellulose sold under the tradename Finnfix®V (sold by CP Kelko).

**Additional Amines:** Additional amines may be used in the compositions described herein for added removal of grease and particulates from soiled materials. The compositions described herein may comprise from about 0.1% to about 10%, in some examples, from about 0.1% to about 4%, and in other examples, from about 0.1% to about 2%, by weight of the composition, of additional amines. Non-limiting examples of additional amines may include, but are not limited to, polyamines, oligoamines, triamines, diamines, pentamines, tetraamines, or combinations thereof. Specific examples of suitable additional amines include tetraethylenepentamine, triethylenetetraamine, diethylenetriamine, or a mixture thereof.

For example, alkoxylated polyamines may be used for grease and particulate removal. Such compounds may include, but are not limited to, ethoxylated polyethyleneimine, ethoxylated hexamethylene diamine, and sulfated versions thereof. Polypropoxylated derivatives may also be included. A wide variety of amines and polyalkyeneimines can be alkoxylated to various degrees. A useful example is 600g/mol polyethyleneimine core ethoxylated to 20 EO groups per NH and is available from BASF. The compositions described herein may comprise from about 0.1% to about 10%, and in some examples, from about 0.1% to about 8%, and in other examples, from about 0.1% to about 6%, by weight of the composition, of alkoxylated polyamines.

Alkoxylated polycarboxylates may also be used in the compositions herein to provide grease removal. Chemically, these materials comprise polyacrylates having one ethoxy side-chain per every 7-8 acrylate units. The side-chains are of the formula $-(CH_2CH_2O)_m (CH_2)_nCH_3$ wherein m is 2-3 and n is 6-12. The side-chains are ester-linked to the polyacrylate "backbone" to provide a "comb" polymer type structure. The molecular weight can vary, but may be in the range of about 2000 to about 50,000. The compositions described herein may comprise from about 0.1% to about 10%, and in some examples, from about 0.25% to about 5%, and in other examples, from about 0.3% to about 2%, by weight of the composition, of alkoxylated polycarboxylates.

**Bleaching Compounds, Bleaching Agents, Bleach Activators, and Bleach Catalysts:** The compositions described herein may contain bleaching agents or bleaching compositions containing a bleaching agent and one or more bleach activators. Bleaching agents may be present at levels of from about 1% to about 30%, and in some examples from about 5% to about 20%, based on the total weight of the composition. If present, the amount of bleach activator may be from about 0.1% to about 60%, and in some examples from about 0.5% to about 40%, of the bleaching composition comprising the bleaching agent plus bleach activator.

Examples of bleaching agents include oxygen bleach, perborate bleach, percarboxylic acid bleach and salts thereof, peroxygen bleach, persulfate bleach, percarbonate bleach, and mixtures thereof.

In some examples, compositions may also include a transition metal bleach catalyst.

Bleaching agents other than oxygen bleaching agents are also known in the art and can be utilized in compositions. They include, for example, photoactivated bleaching agents, or pre-formed organic peracids, such as peroxycarboxylic acid or salt thereof, or a peroxysulphonic acid or salt thereof. A suitable organic peracid is phthaloylimidoperoxycaproic acid. If used, the compositions described herein will typically contain from about 0.025% to about 1.25%, by weight of the composition, of such bleaches, and in some examples, of sulfonate zinc phthalocyanine.

**Brighteners:** Optical brighteners or other brightening or whitening agents may be incorporated at levels of from about 0.01% to about 1.2%, by weight of the composition, into the compositions described herein. Commercial brighteners, which may be used herein, can be classified into subgroups, which include, but are not necessarily limited to, derivatives of stilbene, pyrazoline, coumarin, benzoxazoles, carboxylic acid, methinecyanines, dibenzothiophene-5,5-dioxide, azoles, 5- and 6-membered-ring heterocycles, and other miscellaneous agents.

In some examples, the fluorescent brightener is selected from the group consisting of disodium 4,4'-bis{[4-anilino-6-morpholino-s-triazin-2-yl]-amino}-2,2'-stilbenedisulfonate (brightener 15, commercially available under the tradename Tinopal AMS-GX by Ciba Geigy Corporation), disodium4,4'-bis{[4-anilino-6-(N-2-bis-hydroxyethyl)-s-triazine-2-yl]-amino}-2,2'-stilbenedisulonate (commercially available under the tradename Tinopal UNPA-GX by Ciba-Geigy Corporation), disodium 4,4'-bis{[4-anilino-6-(N-2-hydroxyethyl-N-methylamino)-s-triazine-2-yl]-amino}-2,2'-stilbenedisulfonate (commercially available under the tradename Tinopal 5BM-GX by Ciba-Geigy Corporation). More preferably, the fluorescent brightener is disodium 4,4'-bis{[4-anilino-6-morpholino-s-triazin-2-yl]-amino}-2,2'-stilbenedisulfonate.

The brighteners may be added in particulate form or as a premix with a suitable solvent, for example nonionic surfactant, monoethanolamine, propane diol.

**Fabric Hueing Agents:** The compositions may comprise a fabric hueing agent (sometimes referred to as shading, bluing or whitening agents). Typically, the hueing agent provides a blue or violet shade to fabric. Hueing agents

can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and mixtures thereof.

**Dye Transfer Inhibiting Agents:** The compositions may also include one or more materials effective for inhibiting the transfer of dyes from one fabric to another during the cleaning process. Generally, such dye transfer inhibiting agents may include polyvinyl pyrrolidone polymers, polyamine N-oxide polymers, copolymers of N-vinylpyrrolidone and N-vinylimidazole, manganese phthalocyanine, peroxidases, and mixtures thereof. If used, these agents may be used at a concentration of about 0.0001% to about 10%, by weight of the composition, in some examples, from about 0.01% to about 5%, by weight of the composition, and in other examples, from about 0.05% to about 2% by weight of the composition.

**Chelating Agents:** The compositions described herein may also contain one or more metal ion chelating agents. Suitable molecules include copper, iron and/or manganese chelating agents and mixtures thereof. Such chelating agents can be selected from the group consisting of phosphonates, amino carboxylates, amino phosphonates, succinates, polyfunctionallysubstituted aromatic chelating agents, 2-pyridinol-N-oxide compounds, hydroxamic acids, carboxymethyl inulins, and mixtures therein. Chelating agents can be present in the acid or salt form including alkali metal, ammonium, and substituted ammonium salts thereof, and mixtures thereof.

The chelant may be present in the compositions disclosed herein at from about 0.005% to about 15% by weight, about 0.01% to about 5% by weight, about 0.1% to about 3.0% by weight, or from about 0.2% to about 0.7% by weight, or from about 0.3% to about 0.6% by weight of the composition.

Aminocarboxylates useful as chelating agents include, but are not limited to ethylenediaminetetracetates (EDTA); N-(hydroxyethyl)ethylenediaminetriacetates (HEDTA); nitrilotriacetates (NTA); ethylenediamine tetraproprionates; triethylenetetraaminehexacetates, diethylenetriamine-pentaacetates (DTPA); methylglycinediacetic acid (MGDA); Glutamic acid diacetic acid (GLDA); ethanoldiglycines; triethylenetetraaminehexaacetic acid (TTHA); N-hydroxyethyliminodiacetic acid (HEIDA); dihydroxyethylglycine (DHEG); ethylenediaminetetrapropionic acid (EDTP) and derivatives thereof.

**Encapsulates:** The compositions may comprise an encapsulate. In some aspects, the encapsulate comprises a core, a shell having an inner and outer surface, where the shell encapsulates the core.

In certain aspects, the encapsulate comprises a core and a shell, where the core comprises a material selected from perfumes; brighteners; dyes; insect repellants; silicones; waxes; flavors; vitamins; fabric softening agents; skin care agents, e.g., paraffins; enzymes; anti-bacterial agents; bleaches; sensates; or mixtures thereof; and where the shell comprises a material selected from polyethylenes; polyamides; polyvinylalcohols, optionally containing other co-monomers; polystyrenes; polyisoprenes; polycarbonates; polyesters; polyacrylates; polyolefins; polysaccharides, e.g., alginate and/or chitosan; gelatin; shellac; epoxy resins; vinyl polymers; water insoluble inorganics; silicone; aminoplasts, or mixtures thereof. In some aspects, where the shell comprises an aminoplast, the aminoplast comprises polyurea, polyurethane, and/or polyureaurethane. The polyurea may comprise polyoxymethyleneurea and/or melamine formaldehyde.

Fabric and home care products are typically suitable for: (a) the care of finished textiles, cleaning of finished textiles, sanitization of finished textiles, disinfection of finished textiles, detergents, stain removers, softeners, fabric enhancers, stain removal or finished textiles treatments, pre and post wash treatments, washing machine cleaning and maintenance, with finished textiles intended to include garments and items made of cloth; (b) the care of dishes, glasses, crockery, cooking pots, pans, utensils, cutlery and the like in automatic, in-machine washing, including detergents, preparatory post treatment and machine cleaning and maintenance products for both the dishwasher, the utilized water and its contents; or (c) manual hand dish washing detergents.

The fabric and home care product typically comprises additional fabric and home care ingredients, such as those described in more detail above.

**Liquid laundry detergent composition.** The fabric and home care product can be a laundry detergent composition, such as a liquid laundry detergent composition. Suitable liquid laundry detergent compositions can comprise a non-soap surfactant, wherein the non-soap surfactant comprises an anionic non-soap surfactant and a non-ionic surfactant. The laundry detergent composition can comprise from 10% to 60%, or from 20% to 55% by weight of the laundry detergent composition of the non-soap surfactant. The non-soap anionic surfactant to nonionic surfactant are from 1:1 to 20:1, from 1.5:1 to 17.5:1, from 2:1 to 15:1, or from 2.5:1 to 13:1. Suitable non-soap anionic surfactants include linear alkylbenzene sulphonate, alkyl sulphate or a mixture thereof. The weight ratio of linear alkylbenzene sulphonate to alkyl sulphate can be from 1:2 to 9:1, from 1:1 to 7:1, from 1:1 to 5:1, or from 1:1 to 4:1. Suitable linear alkylbenzene sulphonates are $C_{10}$-$C_{16}$ alkyl benzene sulfonic acids, or $C_{11}$-$C_{14}$ alkyl benzene sulfonic acids. Suitable alkyl sulphate anionic surfactants include alkoxylated alkyl sulphates, non-alkoxylated alkyl sulphates, and mixture

thereof. Preferably, the HLAS surfactant comprises greater than 50% $C_{12}$, preferably greater than 60%, preferably greater than 70% $C_{12}$, more preferably greater than 75% $C_{12}$. Suitable alkoxylated alkyl sulphate anionic surfactants include ethoxylated alkyl sulphate anionic surfactants. Suitable alkyl sulphate anionic surfactants include ethoxylated alkyl sulphate anionic surfactant with a mol average degree of ethoxylation of from 1 to 5, from 1 to 3, or from 2 to 3. The alkyl alkoxylated sulfate may have a broad alkoxy distribution or a peaked alkoxy distribution. The alkyl portion of the AES may include, on average, from 13.7 to about 16 or from 13.9 to 14.6 carbons atoms. At least about 50% or at least about 60% of the AES molecule may include having an alkyl portion having 14 or more carbon atoms, preferable from 14 to 18, or from 14 to 17, or from 14 to 16, or from 14 to 15 carbon atoms. The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. The alkyl fraction of the alkyl sulphate anionic surfactant can be derived from fatty alcohols, oxo-synthesized alcohols, Guerbet alcohols, or mixtures thereof. Preferred alkyl sulfates include optionally ethoxylated alcohol sulfates including 2-alkyl branched primary alcohol sulfates especially 2-branched $C_{12-15}$ primary alcohol sulfates, linear primary alcohol sulfates especially linear $C_{12-14}$ primary alcohol sulfates, and mixtures thereof. The laundry detergent composition can comprise from 10% to 50%, or from 15% to 45%, or from 20% to 40%, or from 30% to 40% by weight of the laundry detergent composition of the non-soap anionic surfactant.

Suitable non-ionic surfactants can be selected from alcohol broad or narrow range alkoxylates, an oxo-synthesised alcohol alkoxylate, Guerbet alcohol alkoxylates, alkyl phenol alcohol alkoxylates, or a mixture thereof. The laundry detergent composition can comprise from 0.01% to 10%, from 0.01% to 8%, from 0.1% to 6%, or from 0.15% to 5% by weight of the liquid laundry detergent composition of a non-ionic surfactant.

The laundry detergent composition comprises from 1.5% to 20%, or from 2% to 15%, or from 3% to 10%, or from 4% to 8% by weight of the laundry detergent composition of soap, such as a fatty acid salt. Such soaps can be amine neutralized, for instance using an alkanolamine such as monoethanolamine.

The laundry detergent composition can comprises an adjunct ingredient selected from the group comprising builders including citrate, enzymes, bleach, bleach catalyst, dye, hueing dye, Leuco dyes, brightener, cleaning polymers including alkoxylated polyamines and polyethyleneimines, amphiphilic copolymers, soil release polymer, surfactant, solvent, dye transfer inhibitors, chelant, diamines, perfume, encapsulated perfume, polycarboxylates, structurant, pH trimming agents, antioxidants, antibacterial, antimicrobial agents, preservatives and mixtures thereof.

The laundry detergent composition can have a pH of from 2 to 11, or from 6.5 to 8.9, or from 7 to 8, wherein the pH of the laundry detergent composition is measured at a 10% product concentration in demineralized water at 20°C.

The liquid laundry detergent composition can be Newtonian or non-Newtonian, preferably non-Newtonian.

For liquid laundry detergent compositions, the composition can comprise from 5% to 99%, or from 15% to 90%, or from 25% to 80% by weight of the liquid detergent composition of water.

The detergent composition according to the invention can be liquid laundry detergent composition. The following are exemplary liquid laundry detergent formulations. Preferably the liquid laundry detergent composition comprises from between 0.1% and 4.0%, preferably between 0.5% and 3%, more preferably between 1% to 2.5% by weight of the detergent composition of the sulfatized esteramine according to the invention.

**Table 1**

| Raw Material | Comp. 1 %wt | Comp. 2 %wt | Comp. 3 %wt | Comp. 4 %wt |
|---|---|---|---|---|
| Branched Alkyl Sulfate | 0.0 | 5.3 | 0.0 | 5.3 |
| Sodium Lauryl Sulfate | 0.0 | 3.0 | 0.0 | 3.0 |
| Linear alkylbenzene sulfonate | 18.0 | 5.0 | 6.0 | 5.0 |
| AE3S Ethoxylated alkyl sulphate with an average degree of ethoxylation of 3 | 5.0 | 0.0 | 1.3 | 0.0 |
| C25AES Ethoxylated alkyl sulphate with an average degree of ethoxylation of 2.5[1] | 0.0 | 3.0 | 1.4 | 0.0 |
| Amine oxide | 0.7 | 1.0 | 0.4 | 0.8 |
| C24 alkyl ethoxylate (EO7) | 8.4 | 0.0 | 12.9 | 5.0 |
| C24 alkyl ethoxylate (EO9) | 0.0 | 8.7 | 0.0 | 3.7 |
| C45 alkyl ethoxylate (EO7) | 0.0 | 2.7 | 0.0 | 2.7 |
| Citric acid | 2.9 | 2.3 | 0.7 | 2.3 |

(continued)

| Raw Material | Comp. 1 %wt | Comp. 2 %wt | Comp. 3 %wt | Comp. 4 %wt |
|---|---|---|---|---|
| Palm kernel fatty acid | 0.0 | 1.0 | 0.0 | 1.0 |
| Topped kernel fatty acid | 2.9 | 0.0 | 2.3 | 0.0 |
| Mannanase | 0.0017 | 0.0017 | 0.0017 | 0.0017 |
| Pectawash | 0.00342 | 0.00342 | 0.00342 | 0.00342 |
| Amylase | 0.00766 | 0.00766 | 0.00766 | 0.00766 |
| Protease | 0.07706 | 0.07706 | 0.07706 | 0.07706 |
| Nuclease[3] | 0.010 | 0.01 | 0.01 | 0.01 |
| Sodium tetraborate | 0.0 | 1.7 | 0.0 | 1.7 |
| MEA-Boric Acid Salt | 0.0 | 0.0 | 0.8 | 0.0 |
| Calcium/sodium formate | 0.0 | 0.04 | 0.01 | 0.04 |
| Sodium/Calcium Chloride | 0.04 | 0.02 | 0.03 | 0.02 |
| Ethoxylated polyethyleneimine[2] | 0.0 | 2.0 | 1.1 | 2.0 |
| Amphiphilic graft copolymer | 1.5 | 0.0 | 0.0 | 0.0 |
| Ethoxylated-Propoxylated polyethyleneimine | 0.0 | 2.0 | 0.8 | 2.0 |
| Zwitterionic polyamine | 0.5 | 0.0 | 0.0 | 0.0 |
| Nonionic polyester terephthalate | 1.0 | 1.0 | 1.0 | 1.0 |
| Graft polymer of the present invention | 1.0 | 2.0 | 1.5 | 2.5 |
| DTPA | 0.0 | 0.1 | 0.2 | 0.1 |
| EDDS | 0.1 | 0.0 | 0.0 | 0.0 |
| GLDA | 0.4 | 0.3 | 0.1 | 0.0 |
| MGDA | 0.2 | 0.0 | 0.0 | 0.5 |
| Diethylene triamine penta(methyl phosphonic) acid (DTPMP) | 1.1 | 0.0 | 0.0 | 0.0 |
| Fluorescent Brightener[8] | 0.06 | 0.22 | 0.03 | 0.15 |
| Ethanol | 0.7 | 1.9 | 0.0 | 1.9 |
| propylene glycol | 5.5 | 5.5 | 0.33 | 5.5 |
| Sorbitol | 0.01 | 0.01 | 0.0 | 0.01 |
| Monoethanolamine | 0.2 | 0.2 | 0.6 | 0.2 |
| DETA | 0.1 | 0.08 | 0.0 | 0.08 |
| Antioxidant 1 | 0.0 | 0.1 | 0.1 | 0.1 |
| Antioxidant 2 | 0.1 | 0.0 | 0.0 | 0.0 |
| Hygiene Agent | 0.0 | 0.0 | 0.05 | 0.0 |
| NaOH | 4.7 | 4.7 | 1.1 | 4.7 |
| NaCS | 3.2 | 1.7 | 3.2 | 1.7 |
| Hydrogenated Castor Oil | 0.2 | 0.1 | 0.12 | 0.1 |
| Aesthetic dye | 0.10 | 0.01 | 0.006 | 0.01 |
| Leuco dye | 0.05 | 0.01 | 0.0 | 0.01 |
| Perfume | 2.0 | 1.3 | 0.5 | 1.3 |

(continued)

| Raw Material | Comp. 1 %wt | Comp. 2 %wt | Comp. 3 %wt | Comp. 4 %wt |
|---|---|---|---|---|
| Perfume microcapsules | 0.5 | 0.05 | 0.1 | 0.05 |
| Silicone antifoam[7] | 0.02 | 0.01 | 0.0 | 0.01 |
| Phenyloxyethanol | 0.002 | 0.01 | 0.0 | 0.01 |
| Hueing dye | 0.01 | 0.1 | 0.05 | 0.1 |
| Water & miscellaneous | balance | balance | balance | balance |
| Description of super-script numbers:<br>1 C12-15EO2.5S AlkylethoxySulfate where the alkyl portion of AES includes from about 13.9 to 14.6 carbon atoms<br>2 PE-20 commercially available from BASF<br>3 Nuclease enzyme is as claimed in co-pending European application 19219568.3<br>4 Antioxidant 1 is 3,5-bis(1,1-dimethylethyl)-4-hydroxybenzenepropanoic acid, methyl ester [6386-38-5]<br>5 Antioxidant 2 is Tinogard TS commercially available from BASF<br>6 Hygiene Agent is agent is Tinosan HP 100 commercially available from BASF<br>7 Dow Corning supplied antifoam blend 80-92% ethylmethyl, methyl(2-phenyl propyl)siloxane; 5-14% MQ Resin in octyl stearate a 3-7% modified silica.<br>8 Fluorescent Brightener is disodium 4,4'-bis{[4-anilino-6-morpholino-s-triazin-2-yl]-amino}-2,2'-stilbenedisulfonate or 2,2'-([1,1'-Biphenyl]-4,4'-diyldi-2,1-ethenediyl)bis-benzenesulfonic acid disodium salt. | | | | |

**Water soluble unit dose article.**

The fabric and home care product can be a water-soluble unit dose article. The water-soluble unit dose article comprises at least one water-soluble film orientated to create at least one unit dose internal compartment, wherein the at least one unit dose internal compartment comprises a detergent composition. The water-soluble film preferably comprises polyvinyl alcohol homopolymer or polyvinyl alcohol copolymer, for example a blend of polyvinylalcohol homopolymers and/or polyvinylalcohol copolymers, for example copolymers selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer. In some examples water soluble films are those supplied by Monosol under the trade references M8630, M8900, M8779, M8310. The detergent product comprises a detergent composition, more preferably a laundry detergent composition. Preferably the laundry detergent composition enclosed in the water-soluble unit dose article comprises from between 0.1% and 8%, preferably between 0.5% and 7%, more preferably 1.0% to 6.0% by weight of the detergent composition of the sulfatized esteramine of the present invention. Preferably the soluble unit dose laundry detergent composition comprises a non-soap surfactant, wherein the non-soap surfactant comprises an anionic non-soap surfactant and a non-ionic surfactant. More preferably, the laundry detergent composition comprises between 10% and 60%, or between 20% and 55% by weight of the laundry detergent composition of the non-soap surfactant. The weight ratio of non-soap anionic surfactant to nonionic surfactant preferably is from 1:1 to 20:1, from 1.5:1 to 17.5:1, from 2:1 to 15:1, or from 2.5:1 to 13:1. The non-soap anionic surfactants preferably comprise linear alkylbenzene sulphonate, alkyl sulphate or a mixture thereof. The weight ratio of linear alkylbenzene sulphonate to alkyl sulphate preferably is from 1:2 to 9:1, from 1:1 to 7:1, from 1:1 to 5:1, or from 1:1 to 4:1. Example linear alkylbenzene sulphonates are $C_{10}$-$C_{16}$ alkyl benzene sulfonic acids, or $C_{11}$-$C_{14}$ alkyl benzene sulfonic acids. By 'linear', we herein mean the alkyl group is linear. Example alkyl sulphate anionic surfactant may comprise alkoxylated alkyl sulphate or non-alkoxylated alkyl sulphate or a mixture thereof. Example alkoxylated alkyl sulphate anionic surfactants comprise an ethoxylated alkyl sulphate anionic surfactant. Example alkyl sulphate anionic surfactant may comprise an ethoxylated alkyl sulphate anionic surfactant with a mol average degree of ethoxylation from 1 to 5, from 1 to 3, or from 2 to 3. Example alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. Example alkyl fraction of the alkyl sulphate anionic surfactant are derived from fatty alcohols, oxo-synthesized alcohols, Guerbet alcohols, or mixtures thereof. Preferably the laundry detergent composition comprises between 10% and 50%, between 15% and 45%, between 20% and 40%, or between 30% and 40% by weight of the laundry detergent composition of the non-soap anionic surfactant. In some examples, the non-ionic surfactant is selected from alcohol alkoxylate, an oxo-synthesised alcohol alkoxylate, Guerbet alcohol alkoxylates, alkyl phenol alcohol alkoxylates, or a mixture thereof. Preferably, the laundry detergent composition comprises between 0.01% and 10%, or between 0.01% and 8%, or between 0.1% and 6%, or between 0.15% and 5% by weight of the liquid laundry detergent composition of a non-ionic surfactant. Preferably, the laundry detergent composition comprises between 1.5% and 20%, between 2% and 15%, between 3% and 10%, or between 4% and 8% by weight of the laundry detergent composition of soap, in some examples a fatty acid salt, in some examples an amine neutralized fatty acid salt, wherein in some examples the amine is an alkanolamine preferably monoethanolamine. Preferably the liquid laundry detergent composition comprises less than 15%, or less than 12% by weight of the liquid laundry detergent composition of water. Preferably, the laundry detergent composition comprises between 10% and 40%, or between 15% and 30% by weight of the liquid laundry detergent composition of a non-aqueous solvent selected from 1,2-propanediol, dipropylene glycol, tripropyleneglycol, glycerol, sorbitol, polyethylene glycol or a mixture thereof. Preferably the liquid laundry detergent composition comprises from 0.1% to 10%, preferably from 0.5% to 8% by weight of the detergent composition of further soil release polymers, preferably selected from the group of nonionic and/or anionically modified polyester terephthalate soil release polymers such as commercially available under the Texcare brand name from Clariant, amphiphilic graft polymers such as those based on polyalkylene oxides and vinyl esters, polyalkoxylated polyethyleneimines, and mixtures thereof. Preferably the liquid detergent composition further comprises from 0.1% to 10% preferably from 1% to 5% of a chelant. In some examples, the laundry detergent composition comprises an adjunct ingredient selected from the group comprising builders including citrate, enzymes, bleach, bleach catalyst, dye, hueing dye, brightener, cleaning polymers including (zwitterionic) alkoxylated polyamines, surfactant, solvent, dye transfer inhibitors, perfume, encapsulated perfume, polycarboxylates, structurant, pH trimming agents, and mixtures thereof. Preferably, the laundry detergent composition has a pH between 6 and 10, between 6.5 and 8.9, or between 7 and 8, wherein the pH of the laundry detergent composition is measured as a 10% product concentration in demineralized water at 20°C. When liquid, the laundry detergent composition may be Newtonian or non-Newtonian, preferably non-Newtonian.

The following is an exemplary water soluble unit dose formulations. The composition can be part of a single chamber water soluble unit dose article or can be split over multiple compartments resulting in below "averaged across compartments" full article composition. The composition is enclosed within a polyvinyl alcohol based water soluble, the polyvinyl alcohol comprising a blend of a polyvinyl alcohol homopolymer and an anionic e.g. carboxylated polyvinyl alcohol copolymer.

**Table 2**

| ***Ingredients*** | Comp. 4 (wt%) |
|---|---|
| Fatty alcohol ethoxylate non-ionic surfactant, $C_{12-14}$ average degree of ethoxylation of 7 | 3.8 |
| Lutensol XL100 | 0.5 |
| Linear $C_{11-14}$ alkylbenzene sulphonate | 24.6 |
| AE3S Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine (Lutensol FP620 - PEI600EO20) | 1.4 |
| Amphiphilic graft copolymer** | 1.6 |
| Zwitterionic polyamine (Lutensit Z96) | 1.5 |
| Anionic polyester terephthalate (Texcare SRA300) | 0.6 |
| Graft polymer of the present invention | 3.0 |
| HEDP | 2.2 |
| Brightener 49 | 0.4 |
| Silicone anti-foam | 0.3 |
| Hueing dye | 0.05 |

(continued)

| ***Ingredients*** | Comp. 4 (wt%) |
|---|---|
| 1,2 PropaneDiol | 11.0 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| $K_2SO_3$ | 0.4 |
| $MgCl_2$ | 0.3 |
| water | 10.5 |
| Hydrogenated castor oil | 0.1 |
| Perfume | 2.1 |
| Aesthetic dye & Minors | Balance to 100 |
| pH (10% product concentration in demineralized water at 20°C) | 7.4 |
| Description of super-scripts:<br>*Nuclease enzyme is as claimed in co-pending European application 19219568.3<br>**polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chains | |

**Hand dishwashing liquid composition.**

The fabric and home care product can be a dishwashing detergent composition, such as a hand dishwashing detergent composition, more preferably a liquid hand dishwashing detergent composition. Preferably the liquid hand dishwashing detergent composition comprises from between 0.1% and 5.0%, preferably between 0.5% and 4%, more preferably 1.0% to 3.0% by weight of the detergent composition of the sulfatized esteramine of the present invention. The liquid hand-dishwashing detergent composition preferably is an aqueous composition, comprising from 50% to 90%, preferably from 60% to 75%, by weight of the total composition of water. Preferably the pH of the detergent composition of the invention, measured as a 10% product concentration in demineralized water at 20°C, is adjusted to between 3 and 14, more preferably between 4 and 13, more preferably between 6 and 12 and most preferably between 8 and 10. The composition of the present invention can be Newtonian or non-Newtonian, preferably Newtonian. Preferably, the composition has a viscosity of from 10 mPa·s to 10,000 mPa s, preferably from 100 mPa·s to 5,000 mPa s, more preferably from 300 mPa·s to 2,000 mPa s, or most preferably from 500 mPa·s to 1,500 mPa s, alternatively combinations thereof. The viscosity is measured at 20°C with a Brookfield RT Viscometer using spindle 31 with the RPM of the viscometer adjusted to achieve a torque of between 40% and 60%.

The composition comprises from 5% to 50%, preferably from 8% to 45%, more preferably from 15% to 40%, by weight of the total composition of a surfactant system. The surfactant system preferably comprises from 60% to 90%, more preferably from 70% to 80% by weight of the surfactant system of an anionic surfactant. Alkyl sulphated anionic surfactants are preferred, particularly those selected from the group consisting of: alkyl sulphate, alkyl alkoxy sulphate preferably alkyl ethoxy sulphate, and mixtures thereof. The alkyl sulphated anionic surfactant preferably has an average alkyl chain length of from 8 to 18, preferably from 10 to 14, more preferably from 12 to 14, most preferably from 12 to 13 carbon atoms. The alkyl sulphated anionic surfactant preferably has an average degree of alkoxylation preferably ethoxylation, of less than 5, preferably less than 3, more preferably from 0.5 to 2.0, most preferably from 0.5 to 0.9. The alkyl sulphate anionic surfactant preferably has a weight average degree of branching of more than 10%, preferably more than 20%, more preferably more than 30%, even more preferably between 30% and 60%, most preferably between 30% and 50%. Suitable counterions include alkali metal cation earth alkali metal cation, alkanolammonium or ammonium or substituted ammonium, but preferably sodium. Suitable examples of commercially available alkyl sulphate anionic surfactants include, those derived from alcohols sold under the Neodol® brand-name by Shell, or the Lial®, Isalchem®, and Safol® brand-names by Sasol, or some of the natural alcohols produced by The Procter & Gamble Chemicals

company.

The surfactant system preferably comprises from 0.1% to 20%, more preferably from 0.5% to 15% and especially from 2% to 10% by weight of the liquid hand dishwashing detergent composition of a co-surfactant. Preferred co-surfactants are selected from the group consisting of an amphoteric surfactant, a zwitterionic surfactant, and mixtures thereof. The anionic surfactant to the co-surfactant weight ratio can be from 1:1 to 8:1, preferably from 2:1 to 5:1, more preferably from 2.5:1 to 4:1. The co-surfactant is preferably an amphoteric surfactant, more preferably an amine oxide surfactant. Preferably, the amine oxide surfactant is selected from the group consisting of: alkyl dimethyl amine oxide, alkyl amido propyl dimethyl amine oxide, and mixtures thereof, most preferably C12-C14 alkyl dimethyl amine oxide. Suitable zwitterionic surfactants include betaine surfactants, preferably cocamidopropyl betaine.

Preferably, the surfactant system of the composition of the present invention further comprises from 1% to 25%, preferably from 1.25% to 20%, more preferably from 1.5% to 15%, most preferably from 1.5% to 5%, by weight of the surfactant system, of a non-ionic surfactant. Suitable nonionic surfactants can be selected from the group consisting of: alkoxylated non-ionic surfactant, alkyl polyglucoside ("APG") surfactant, and mixtures thereof. Suitable alkoxylated non-ionic surfactants can be linear or branched, primary or secondary alkyl alkoxylated preferably alkyl ethoxylated non-ionic surfactants comprising on average from 9 to 15, preferably from 10 to 14 carbon atoms in its alkyl chain and on average from 5 to 12, preferably from 6 to 10, most preferably from 7 to 8, units of ethylene oxide per mole of alcohol. Most preferably, the alkyl polyglucoside surfactant has an average alkyl carbon chain length between 10 and 16, preferably between 10 and 14, most preferably between 12 and 14, with an average degree of polymerization of between 0.5 and 2.5 preferably between 1 and 2, most preferably between 1.2 and 1.6. C8-C16 alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation).

The liquid hand dishwashing detergent composition herein may optionally comprise a number of other adjunct ingredients such as builders (e.g., preferably citrate), chelants (e.g., preferably GLDA), conditioning polymers, cleaning polymers including polyalkoxylated polyalkylene imines, surface modifying polymers, soil flocculating polymers, sudsing polymers including EO-PO-EO triblock copolymers, grease cleaning amines including cyclic polyamines, structurants, emollients, humectants, skin rejuvenating actives, enzymes, carboxylic acids, scrubbing particles, bleach and bleach activators, perfumes, malodor control agents, pigments, dyes, opacifiers, beads, pearlescent particles, microcapsules, organic solvents, inorganic cations such as alkaline earth metals such as Ca/Mg-ions, antibacterial agents, preservatives, viscosity adjusters (e.g., salt such as NaCl, and other mono-, di- and trivalent salts) and pH adjusters and buffering means (e.g. carboxylic acids such as citric acid, HCl, NaOH, KOH, alkanolamines, phosphoric and sulfonic acids, carbonates such as sodium carbonates, bicarbonates, sesquicarbonates, borates, silicates, phosphates, imidazole and alike).

The following is an exemplary liquid hand dishwashing detergent formulation. The formulation can be made through standard mixing of the individual components.

Table 3

| As 100% active | Comp. 5 (wt%) |
|---|---|
| C1213AE0.6S anionic surfactant (Avg. branching : 37,84%) | 19.6 |
| C1214 dimethyl amine oxide | 6.5 |
| Alcohol ethoxylate nonionic surfactant (Neodol 91/8) | 1.0 |
| Alkoxylated polyethyleneimine (PEI600EO24PO16) | 0.2 |
| Graft polymer of the present invention | 1.0 |
| Ethanol | 2.4 |
| NaCl | 0.7 |
| Polypropyleneglycol (MW2000) | 0.9 |
| Water + Minor ingredients (perfume, dye, preservatives) | Balance to 100 |
| pH (at 10% product concentration in demineralized water-with NaOH trimming) | 9.0 |

**Solid free-flowing particulate laundry detergent composition.**

The fabric and home care product can be solid free-flowing particulate laundry detergent composition. The following is an exemplary solid free-flowing particulate laundry detergent composition.

**Table 4**

| Ingredient | Comp. 6 (wt%) |
|---|---|
| **Anionic detersive surfactant** (such as alkyl benzene sulphonate, alkyl ethoxylated sulphate and mixtures thereof) | from 8wt% to 15wt% |
| **Non-ionic detersive surfactant** (such as alkyl ethoxylated alcohol) | from 0.1wt% to 4wt% |
| **Cationic detersive surfactant** (such as quaternary ammonium compounds) | from 0wt% to 4wt% |
| **Other detersive surfactant** (such as zwiterionic detersive surfactants, amphoteric surfactants and mixtures thereof) | from 0wt% to 4wt% |
| **Carboxylate polymer** (such as co-polymers of maleic acid and acrylic acid and/or carboxylate polymers comprising ether moieties and sulfonate moieties) | from 0.1wt% to 4wt% |
| **Polyethylene glycol polymer** (such as a polyethylene glycol polymer comprising polyvinyl acetate side chains) | from 0wt% to 4wt% |
| **Polyester soil release polymer** (such as Repel-o-tex and/or Texcare polymers) | from 0wt% to 2wt% |
| **Cellulosic polymer** (such as carboxymethyl cellulose, methyl cellulose and combinations thereof) | from 0.5wt% to 2wt% |
| **Graft polymer of the present invention** | From 0.1wt% to 4wt% |
| **Other polymer** (such as care polymers) | from 0wt% to 4wt% |
| **Zeolite builder and phosphate builder** (such as zeolite 4A and/or sodium tripolyphosphate) | from 0wt% to 4wt% |
| **Other co-builder** (such as sodium citrate and/or citric acid) | from 0wt% to 3wt% |
| **Carbonate salt** (such as sodium carbonate and/or sodium bicarbonate) | from 0wt% to 20wt% |
| **Silicate salt** (such as sodium silicate) | from 0wt% to 10wt% |
| **Filler** (such as sodium sulphate and/or bio-fillers) | from 10wt% to 70wt% |
| **Source of hydrogen peroxide** (such as sodium percarbonate) | from 0wt% to 20wt% |
| **Bleach activator** (such as tetraacetylethylene diamine (TAED) and/or nonanoyloxybenzenesulphonate (NOBS)) | from 0wt% to 8wt% |
| **Bleach catalyst** (such as oxaziridinium-based bleach catalyst and/or transition metal bleach catalyst) | from 0wt% to 0.1wt% |
| **Other bleach** (such as reducing bleach and/or pre-formed peracid) | from 0wt% to 10wt% |
| **Photobleach** (such as zinc and/or aluminium sulphonated phthalocyanine) | from 0wt% to 0.1wt% |
| **Chelant** (such as ethylenediamine-N'N'-disuccinic acid (EDDS) and/or hydroxyethane diphosphonic acid (HEDP)) | from 0.2wt% to 1wt% |
| **Hueing agent** (such as direct violet 9, 66, 99, acid red 50, solvent violet 13 and any combination thereof) | from 0wt% to 1wt% |

(continued)

| Ingredient | Comp. 6 (wt%) |
|---|---|
| **Brightener** (C.I. fluorescent brightener 260 or C.I. fluorescent brightener 351) | from 0.1wt% to 0.4wt% |
| **Protease** (such as Savinase, Savinase Ultra, Purafect, FN3, FN4 and any combination thereof) | from 0.1wt% to 0.4wt% |
| **Amylase** (such as Termamyl, Termamyl ultra, Natalase, Optisize, Stainzyme, Stainzyme Plus and any combination thereof) | from 0wt% to 0.2wt% |
| **Cellulase** (such as Carezyme and/or Celluclean) | from 0wt% to 0.2wt% |
| **Lipase** (such as Lipex, Lipolex, Lipoclean and any combination thereof) | from 0wt% to 1wt% |
| **Other enzyme** (such as xyloglucanase, cutinase, pectate lyase, mannanase, bleaching enzyme) | from 0wt% to 2wt% |
| **Fabric softener** (such as montmorillonite clay and/or polydimethylsiloxane (PDMS)) | from 0wt% to 15wt% |
| **Flocculant** (such as polyethylene oxide) | from 0wt% to 1wt% |
| **Suds suppressor** (such as silicone and/or fatty acid) | from 0wt% to 4wt% |
| **Perfume** (such as perfume microcapsule, spray-on perfume, starch encapsulated perfume accords, perfume loaded zeolite, and any combination thereof) | from 0.1wt% to 1wt% |
| **Aesthetics** (such as coloured soap rings and/or coloured speckles/noodles) | from 0wt% to 1wt% |
| **Miscellaneous** | balance to 100wt% |

**Further Embodiments**

Another subject-matter of the present invention is the use of at least one graft polymer in laundry detergents, in cleaning compositions and/or in fabric and home care products, wherein the graft polymer comprises

(A) a block copolymer backbone as a graft base, wherein said block copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide, and
(B) polymeric sidechains grafted onto the block copolymer backbone, wherein said polymeric sidechains (B) are obtainable by polymerization of at least one vinyl ester monomer (B1) selected from vinyl acetate or vinyl propionate and optionally N-vinylpyrrolidone as optional further monomer (B2).

Within this specific subject-matter of the present invention, it is preferred that the number (x) of individual blocks within the block copolymer backbone (A) is an integer, wherein x has a value from 2 to 10, preferably x has a value from 2 to 5, more preferably x is 2 or 3, most preferably x is 3.
Also, within this specific subject-matter, it is preferred that the vinyl ester monomer (B1) comprises at least 50%, by weight of B1 monomers, vinyl acetate.
Furthermore, this specific subject-matter also includes all preferred, more preferred etc. definitions/features as mentioned above in connection with the definition of the graft polymer as such as well, under the provisio that the at least one vinyl ester monomer (B1) is selected from vinyl acetate or vinyl propionate.
A further subject-matter of the present invention is, therefore, a laundry detergent, a cleaning composition and/or a fabric and home care product containing at least one graft polymer comprising:

(A) a block copolymer backbone as a graft base, wherein said block copolymer backbone (A) is obtainable by

polymerization of at least two monomers selected from the group of ethylene oxide, 1,2-propylene oxide, 1,2-butylene oxide, 2,3-butylene oxide, 1,2-pentene oxide or 2,3-pentene oxide, and
(B) polymeric sidechains grafted onto the block copolymer backbone, wherein said polymeric sidechains (B) are obtainable by polymerization of at least one vinyl ester monomer (B1) selected from vinyl acetate or vinyl propionate and optionally N-vinylpyrrolidone as optional further monomer (B2).

Within this specific subject-matter of the present invention, it is preferred that the number (x) of individual blocks within the block copolymer backbone (A) is an integer, wherein x has a value from 2 to 10, preferably x has a value from 2 to 5, more preferably x is 2 or 3, most preferably x is 3.
Also, within this specific subject-matter, it is preferred that the vinyl ester monomer (B1) comprises at least 50%, by weight of B1 monomers, vinyl acetate.
It is preferred, that within this respective laundry detergent, cleaning composition and/or fabric and home care product, the at least one graft polymer is present in an amount ranging from about 0.01% to about 20%, preferably from about 0.05% to 15%, more preferably from about 0.1% to about 10%, and most preferably from about 0.5% to about 5%, in relation to the total weight of such composition or product.
A further embodiment of the present invention relates to a graft polymer comprising:

(A) a block copolymer backbone as a graft base, wherein said block copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide, and
(B) polymeric sidechains grafted onto the block copolymer backbone, wherein said polymeric sidechains (B) are obtainable by polymerization of at least one vinyl ester monomer (B1) and optionally N-vinylpyrrolidone as optional further monomer (B2).

Within this specific subject matter of the present invention, it is preferred that the number (x) of individual blocks within the block copolymer backbone (A) is an integer, wherein x has a value from 2 to 10, preferably x has a value from 2 to 5, more preferably x is 2 or 3, most preferably x is 3.
Also, within this specific subject matter, it is preferred that the vinyl ester monomer (B1) comprises at least 50%, by weight of B1 monomers, vinyl acetate.
Furthermore, this specific subject matter also includes all preferred, more preferred etc. definitions/features as mentioned above in connection with other embodiments of the present invention as well.

**Method of Use**

The present invention includes a method for cleaning a targeted surface. As used herein "targeted surface" may include such surfaces such as fabric, dishes, glasses, and other cooking surfaces, hard surfaces, hair or skin. As used herein "hard surface" includes hard surfaces being found in a typical home such as hard wood, tile, ceramic, plastic, leather, metal, glass. Such method includes the steps of contacting the composition comprising the modified polyol compound, in neat form or diluted in wash liquor, with at least a portion of a targeted surface then optionally rinsing the targeted surface. Preferably the targeted surface is subjected to a washing step prior to the aforementioned optional rinsing step. For purposes of the present invention, washing includes wiping and mechanical agitation.
As will be appreciated by one skilled in the art, the cleaning compositions of the present invention are ideally suited for use in home care (hard surface cleaning compositions) and/or laundry applications.
The composition solution pH is chosen to be the most complimentary to a target surface to be cleaned spanning broad range of pH, from about 3 to about 11. For personal care such as skin and hair cleaning pH of such composition preferably has a pH from about 5 to about 8 for laundry cleaning compositions pH of from about 5 to about 11. The compositions are preferably employed at concentrations of from about 200 ppm to about 10,000 ppm in solution. The water temperatures preferably range from about 5 °C to about 100 °C.
For use in laundry cleaning compositions, the compositions are preferably employed at concentrations from about 200 ppm to about 10000 ppm in solution (or wash liquor). The water temperatures preferably range from about 5°C to about 60°C. The water to fabric ratio is preferably from about 1:1 to about 20:1.
The method may include the step of contacting a nonwoven substrate impregnated with an embodiment of the composition of the present invention. As used herein "nonwoven substrate" can comprise any conventionally fashioned nonwoven sheet or web having suitable basis weight, caliper (thickness), absorbency and strength characteristics. Examples of suitable commercially available nonwoven substrates include those marketed under the tradename SONTARA@ by DuPont and POLYWEB® by James River Corp.
As will be appreciated by one skilled in the art, the cleaning compositions of the present invention are ideally suited for use in liquid dish cleaning compositions. The method for using a liquid dish composition of the present invention

comprises the steps of contacting soiled dishes with an effective amount, typically from about 0.5 ml. to about 20 ml. (per 25 dishes being treated) of the liquid dish cleaning composition of the present invention diluted in water.

The present invention also includes methods for use such graft polymer for improved soil suspension performance, soil release performance, stain removal performance, anti-redeposition performance, and/or malodor control performance.

The following examples shall further illustrate the present invention.

**Polymer measurements**

K-value measures the relative viscosity of dilute polymer solutions and is a relative measure of the weight average molecular weight. As the weight average molecular weight of the polymer increases for a particular polymer, the K-value tends to also increase. The K--value is determined in a 3% by weight NaCl solution at 23°C and a polymer concentration of 1% polymer according to the method of H. Fikentscher in "Cellulosechemie", 1932, 13, 58.

The number average molecular weight ($M_n$), the weight average molecular weight ($M_w$) and the polydispersity $M_w/M_n$ of the inventive graft polymers were determined by gel permeation chromatography in tetrahydrofuran. The mobile phase (eluent) used was tetrahydrofuran comprising 0.035 mol/L diethanolamine. The concentration of graft polymer in tetrahydrofuran was 2.0 mg per mL. After filtration (pore size 0.2 μm), 100 μL of this solution were injected into the GPC system. Four different columns (heated to 60°C) were used for separation (SDV precolumn, SDV 1000A, SDV 100000A, SDV 1000000A). The GPC system was operated at a flow rate of 1 mL per min. A DRI Agilent 1100 was used as the detection system. Polyethylene glycol) (PEG) standards (PL) having a molecular weight $M_n$ from 106 to 1 378 000 g/mol were used for the calibration.

EXAMPLES

**Synthesis Examples:**

*Procedure for comparative polymer: graft polymerization of vinyl acetate on poly(ethylene glycol) (Comparative polymer 9)*

A polymerization vessel equipped with stirrer and reflux condenser was initially charged with 600 g of poly(ethylene glycol) under nitrogen atmosphere and melted at 90°C.

Feed 1 containing 4.8 g of tert-butyl peroxy-2-ethylhexanoate, dissolved in 23.6 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed within 6:00 h at constant feed rate and 90°C. Upon completion of the Feeds 1 and 2, the temperature was increased to 95°C and Feed 3 consisting of 3.16 g of tert-butyl peroxy-2-ethylhexanoate, dissolved in 15.70 g of tripropylene glycol, were dosed within 56 min with constant flow rate at 95 °C. The mixture was stirred for one hour at 95°C upon complete addition of the feed.

Residual amounts of monomer were removed by vacuum distillation for 1 h at 95°C and 500 mbar.

General procedure for comparative polymers without grafting

*(Comparative polymers 10 - 13*)

1098.90 g of triblock copolymer, 1.10 g vinyl acetate and 58.30 g of 1,2-propanediol were mixed in a polymerization vessel at 90°C and stirred for 3 h.

*General procedure for graft polymerization of vinyl acetate in a ratio of polyalkylene oxide / VAc (40 / 60)*

*(Inventive polymers 1, 3; comparative polymers 6, 7)*

A polymerization vessel equipped with stirrer and reflux condenser was initially charged with 440 g of triblock copolymer under nitrogen atmosphere and melted at 90°C.

Feed 1 containing 7.97 g of tert-butyl peroxy-2-ethylhexanoate, dissolved in 35.09 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (660 g of vinyl acetate) was started and dosed to the reaction vessel within 6:00 h at constant feed rate and 90°C. Upon completion of the feeds, Feed 3 consisting of 5.28 g of tert-butyl peroxy-2-ethylhexanoate, dissolved in 23.21 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

*General procedure for graft polymerization of vinyl acetate in a ratio of polyalkylene oxide / VAc (50 / 50)*

*(Inventive polymer 2; comparative polymer 4)*

A polymerization vessel equipped with stirrer and reflux condenser was initially charged with 500 g of triblock copolymer under nitrogen atmosphere and melted at 90°C.

Feed 1 containing 12.24 g of tert-butyl peroxy-2-ethylhexanoate, dissolved in 50.30 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (200 g of vinyl acetate) was started and dosed to the reaction vessel within 6:00 h at constant feed rate and 90°C. Upon completion of the feeds, Feed 3 consisting of 4.80 g of tert-butyl peroxy-2-ethylhexanoate, dissolved in 19.70 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

*General procedure 1 for graft polymerization of vinyl acetate in a ratio of polyalkylene oxide / VAc (60 / 40)*

*(Inventive polymers 4, 5, 7-9, 13-15; Comparative polymers 1, 2, 5, 8)*

A polymerization vessel equipped with stirrer and reflux condenser was initially charged with 600 g of triblock copolymer under nitrogen atmosphere and melted at 90°C.

Feed 1 containing 4.8 g of tert-butyl peroxy-2-ethylhexanoate, dissolved in 23.6 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed within 6:00 h at constant feed rate and 90°C. Upon completion of the Feeds 1 and 2, the temperature was increased to 95°C and Feed 3 consisting of 3.16 g of tert-butyl peroxy-2-ethylhexanoate, dissolved in 15.70 g of tripropylene glycol, were dosed within 56 min with constant flow rate at 95 °C. The mixture was stirred for one hour at 95°C upon complete addition of the feed.

Residual amounts of monomer were removed by vacuum distillation for 1 h at 95°C and 500 mbar. The resulting graft polymer (Ex. 7) had a mean molecular weight $M_w$ of 5 190 g/mol and a polydispersity of 1.5.

*General procedure for graft polymerization of vinyl acetate in a ratio of polyalkylene oxide / VAc (70 / 30)*

*(Inventive polymer 11; comparative polymer 3)*

A polymerization vessel equipped with stirrer and reflux condenser was initially charged with 770 g of triblock copolymer under nitrogen atmosphere and melted at 90°C.

Feed 1 containing 7.97 g of tert-butyl peroxy-2-ethylhexanoate, dissolved in 35.09 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (330 g of vinyl acetate) was started and dosed to the reaction vessel within 6:00 h at constant feed rate and 90°C. Upon completion of the feeds, Feed 3 consisting of 5.28 g of tert-butyl peroxy-2-ethylhexanoate, dissolved in 23.21 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

*General procedure for graft polymerization of vinyl acetate in a ratio of polyalkylene oxide / VAc (80 / 20)*

*(Inventive polymers 6, 10, 12)*

A polymerization vessel equipped with stirrer and reflux condenser was initially charged with 800 g of triblock copolymer under nitrogen atmosphere and melted at 90°C.

Feed 1 containing 10.20 g of tert-butyl peroxy-2-ethylhexanoate, dissolved in 47.61 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (200 g of vinyl acetate) was started and dosed to the reaction vessel within 6:00 h at constant feed rate and 90°C. Upon completion of the feeds, Feed 3 consisting of 4.90 g of tert-butyl peroxy-2-ethylhexanoate, dissolved in 22.39 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

*Procedure for graft polymerization of vinyl acetate and vinyl pyrrolidone in 1,2-propanediol*

*(Inventive polymer 16)*

A polymerization vessel equipped with stirrer and reflux condenser was initially charged with 376.3 g of triblock copolymer under nitrogen atmosphere and melted at 90°C.

Feed 1 containing 7.12 g of tert-butyl perpivalate, dissolved in 17.01 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (225.78 g of vinyl acetate) and Feed 3 (150.25 g of vinyl pyrrolidone) were started simultaneously and dosed to the reaction vessel within 6:00 h at constant feed rate and 90°C. 3 h after the start of Feeds 2 and 3, Feed 4 (142.31 g 1,2-propanediol) was started and dosed to the reaction vessel in 3 h with constant feed rate. Upon completion of the feeds the temperature was increased to 95°C and Feed 3 consisting of 4.72 g of tert-butyl perpivalate, dissolved in 11.25 g of 1,2-propanediol, was dosed within 56 min with constant flow rate at 95°C. The mixture was stirred for one hour at 95°C upon complete addition of the feed.

Residual amounts of monomer were removed by vacuum distillation for 1 h at 95°C and 500 mbar. Water (76.84 g) was added.

Structure details of more comparative and inventive polymer examples are listed in **Table 5.**

**Table 5**:

| | | Backbone type | $M_n$ | EO | polymeric sidechains (B) | SUB | Biodegradation (28 day) [%] | OG | FJ |
|---|---|---|---|---|---|---|---|---|---|
| Comparative polymer | 1 | A1 | 5900 | 0.52 | VAc | 0.40 | 12.4 | -3.4 | -53.8 |
| | 2 | A1 | 4600 | 0.47 | VAc | 0.40 | 14.5 | -1.7 | -20.3 |
| | 3 | A1 | 5900 | 0.52 | VAc | 0.30 | 14.7 | -3.1 | -7.1 |
| | 4 | A1 | 3500 | 0.09 | VAc | 0.50 | 15.4 | -1.1 | -2.1 |
| | 5 | A1 | 6500 | 0.57 | VAc | 0.40 | 16.1 | -3.4 | -74.1 |
| | 6 | A1 | 8300 | 0.83 | VAc | 0.60 | 16.2 | -1.4 | -332.5 |
| | 7 | A1 | 3650 | 0.30 | VAc | 0.60 | 17.6 | -0.3 | -60.9 |
| | 8 | A1 | 4600 | 0.47 | VAc | 0.40 | 19.0 | -1.7 | -20.3 |
| | 9 | C | 6000 | 1.00 | VAc | 0.60 | 28.0 | -0.86 | -279.4 |
| | 10 | A1 | 8300 | 0.83 | VAc | 0.001 | 79.9 | 2.6 | 148.4 |
| | 11 | A1 | 2900 | 0.46 | VAc | 0.001 | 82.9 | 3.9 | 136.9 |
| | 12 | A1 | 2450 | 0.34 | VAc | 0.001 | 84.6 | 4.9 | 86.2 |
| | 13 | A1 | 2000 | 0.16 | VAc | 0.001 | 100 | 5.6 | 4.1 |
| | 1 | A2 | 2650 | 0.46 | VAc | 0.60 | 28.8 | 5.1 | -90.9 |
| | 2 | A1 | 2450 | 0.34 | VAc | 0.50 | 30.0 | 5.2 | -25.8 |
| | 3 | A1 | 2900 | 0.46 | VAc | 0.60 | 31.6 | 3.9 | -92.4 |
| | 4 | A1 | 2450 | 0.34 | VAc | 0.40 | 32.7 | 5.1 | 5.8 |

| | | | | | | | | | |
|---|---|---|---|---|---|---|---|---|---|
| | 5 | A1 | 2900 | 0.46 | VAc | 0.40 | 39.6 | 3.9 | 2.5 |
| | 6 | A1 | 2450 | 0.34 | VAc | 0.20 | 46.3 | 5.0 | 55.2 |
| | 7 | A2 | 3100 | 0.24 | VAc | 0.40 | 47.0 | 1.5 | 3.2 |
| | 8 | A2 | 2150 | 0.26 | VAc | 0.40 | 49.3 | 6.0 | 7.6 |
| | 9 | A1 | 1750 | 0.44 | VAc | 0.40 | 49.6 | 9.4 | 6.1 |
| | 10 | A1 | 2900 | 0.46 | VAc | 0.20 | 49.8 | 3.9 | 67.3 |
| | 11 | A2 | 1950 | 0.55 | VAc | 0.30 | 52.1 | 9.0 | 48.5 |
| | 12 | A2 | 2650 | 0.46 | VAc | 0.20 | 56.8 | 5.0 | 70.7 |
| | 13 | A2 | 2650 | 0.46 | VAc | 0.40 | 59.3 | 5.0 | 4.1 |
| | 14 | A1 | 1000 | 0.19 | VAc | 0.40 | 70.0 | 12.1 | 3.1 |
| | 15 | A1 | 2000 | 0.16 | VAc | 0.40 | 73.3 | 6.1 | 8.3 |
| | 16 | A1 | 2900 | 0.40 | Vac (0.30) / VP (0.20) | 0.50 | 42.0 | 3.5 | -35.0 |

VAc = Vinyl acetate; VP = Vinyl pyrrolidone;

A1: EO/PO/EO triblock backbone; A2: PO/EO/PO tri-block backbone; C: PEG

"$M_n$" is the number average molecular weight of the block copolymer backbone (A);

"EO" is the molar ratio of ethylene oxide moieties to total alkylene oxide moieties present in the backbone (A)

"SUB" is the weight percentage, by weight of the polymer, of polymeric sidechains (B);

**Method for measuring polymer biodegradability**

Biodegradation in wastewater was tested in triplicate using the OECD 301F manometric respirometry method. 30 mg/mL test substance is inoculated into wastewater taken from Mannheim Wastewater Treatment Plant and incubated in a closed flask at 25°C for 28 days. The consumption of oxygen during this time is measured as the change in pressure inside the flask using an OxiTop C (WTW). Evolved $CO_2$ is absorbed using an NaOH solution. The amount of oxygen consumed by the microbial population during biodegradation of the test substance, after correction using a blank, is expressed as a % of the ThOD (Theoretical Oxygen Demand).

The biodegradation data of comparative and inventive polymers at 28 day of the OECD 301F test is summerized in **Table 5.**

As shown in **Table 5,** compare to comparative polymers 1 to 10, inventive graft polymers 1 to 17 show higher percentatage of biodegradation at 28 day of the OECD 301F test than

Graft polymers of this invention has an OG of greater than 0, wherein

$$OG = a_X\, EO + b_X\, M_n^2 - c_X\, (M_n \times SUB) - d_X\, M_n + e_X\, SUB + h_X$$

wherein:

"$M_n$" is the number average molecular weight of the block copolymer backbone (A);
"EO" is the molar ratio of ethylene oxide moieties to total alkylene oxide moieties present in the backbone (A), wherein EO is in the range of from 0 to less than 1.00,
"SUB" is the weight percentage, by weight of the polymer, of polymeric sidechains (B);
"$a_{X"}$" is a coefficient and equals 7.06;
"bx" is a coefficient and equals $5.63\times10^{-7}$;
"$c_X$" is a coefficient and equals $1.25\times10^{-3}$;
"dx" is a coefficient and equals $7.03\times10^{-3}$;
"ex" is a coefficient and equals 3.66; and
"hx" is a coefficient and equals 16.3.

Within the scope of inventive graft polymers as defined by OG, it is more preferred that inventive graft polymer has a FJ of greater than 0, wherein

$$FJ = a_Y\, EO - b_Y\, M_n^2 + d_Y\, M_n + e_Y\, SUB - f_Y\, SUB^2 - g_Y\, (EO \times SUB) - h_Y$$

wherein:

"$a_Y$" is a coefficient and equals 446;
"$b_Y$" is a coefficient and equals $4.02\times10^{-6}$;
"dy" is a coefficient and equals 0.0168;
"$e_Y$" is a coefficient and equals 281;
"$f_Y$" is a coefficient and equals 229;
"$g_Y$" is a coefficient and equals 1140; and
"$h_Y$" is a coefficient and equals 83.6.

**Method for evaluating suds mileage of hand dish composition**

The objective of the Suds Mileage Index test is to compare the evolution over time of suds volume generated for different test formulations at specified water hardness, solution temperatures and formulation concentrations, while under the influence of periodic soil injections. Data are compared and expressed versus a reference composition as a suds mileage index (reference composition has suds mileage index of 100). The steps of the method are as follows:

1) A defined amount of a test composition, depending on the targeted composition concentration (0.12 wt%), is dispensed through a plastic pipette at a flow rate of 0.67 mL/ sec at a height of 37 cm above the bottom surface of a sink (dimension: 300 mm diameter and 288 mm height) into a water stream (water hardness: 15 gpg, water temperature:35°C) that is filling up the sink to 4 L with a constant pressure of 4 bar.
2) An initial suds volume generated (measured as average foam height X sink surface area and expressed in $cm^3$)

is recorded immediately after end of filling.
3) A fixed amount (6 mL) of soil is immediately injected into the middle of the sink.
4) The resultant solution is mixed with a metal blade (10 cm × 5 cm) positioned in the middle of the sink at the air liquid interface under an angle of 45 degrees rotating at 85 RPM for 20 revolutions.
5) Another measurement of the total suds volume is recorded immediately after end of blade rotation.
6) Steps 3-5 are repeated until the measured total suds volume reaches a minimum level of 400 $cm^3$. The amount of added soil that is needed to get to the 400 $cm^3$ level is considered as the suds mileage for the test composition.
7) Each test composition is tested 4 times per testing condition (i.e., water temperature, composition concentration, water hardness, soil type).
8) The average suds mileage is calculated as the average of the 4 replicates for each sample.
9) Calculate a Suds Mileage Index by comparing the average mileage of a test composition sample versus a reference composition sample. The calculation is as follows:

$$\text{Suds Mileage Index} = \frac{\text{Average number of soil additions of test composition}}{\text{Average number of soil additions of reference composition}} \times 100$$

Soil composition is produced through standard mixing of the components described in **Table 6.**

**Table 6:** Greasy Soil

| Ingredient | Weight % |
|---|---|
| Crisco Oil | 12.730 |
| Crisco shortening | 27.752 |
| Lard | 7.638 |
| Refined Rendered Edible Beef Tallow | 51.684 |
| Oleic Acid, 90% (Techn) | 0.139 |
| Palmitic Acid, 99+% | 0.036 |
| Stearic Acid, 99+% | 0.021 |

**Method for evaluating whiteness benefit of polymers**

Whiteness maintenance, also referred to as whiteness preservation, is the ability of a detergent to keep white items from whiteness loss when they are washed in the presence of soils. White garments can become dirty/dingy looking over time when soils are removed from dirty clothes and suspended in the wash water, then these soils can re-deposit onto clothing, making the clothing less white each time they are washed.
The whiteness benefit of polymers of the present disclosure is evaluated using automatic Tergotometer with 10 pots for laundry formulation testing.
SBL2004 test soil strips supplied by WFK Testgewebe GmbH are used to simulate consumer soil levels (mix of body soil, food, dirt etc.). On average, every 1 SBL2004 strip is loaded with 8g soil. The SBL2004 test soil strips were cut into 5x5 cm squares for use in the test.
White Fabric swatches of **Table 7** below purchased from WFK Testgewebe GmbH are used as whiteness tracers. Before wash test, L, a, b values of all whiteness tracers are measured using Konica Minolta CM-3610D spectrophotometer.

**Table 7**

| Cod e | Fiber Content | % Fiber Conten t | Fabric Constructio n | Size | WFK Code |
|---|---|---|---|---|---|
| CK | Cotton | 100 | Weft Knit | (5×5cm) | 19502_5x5_stam ped |
| PC | Polyester/cotton | 65/35 | Weave | (5×5cm) | 19503_5x5_stam ped |
| PE | Polyester | 100 | Weft Knit | (5×5cm) | 19508_5×5_stam ped |
| PS | Polyester/Spande x™ | 95/5 | Weft Knit | (5×5cm) | 19507_5x5_stam ped |

Additional ballast (background fabric swatches) are also used to simulate a fabric load and provide mechanical energy during the real laundry process. Ballast loads are comprised of cotton and polycotton knit swatches at 5x5 cm size. 4 cycles of wash are needed to complete the test:

**Cycle 1:** Desired amount of detergent is fully dissolved by mixing with 1L water (at defined hardness) in each tergotometer port. 60 grams of fabrics, including whiteness tracers (4 types, each with 4 replicates), 21 pieces 5x5 cm SBL2004, and ballast are washed and rinsed in the tergotometer pot under defined conditions.
In the test of water-soluble unit dose composition, wash concentration is 2000ppm. Additional 47 ppm PVOH film is also added to the tergotometer pot. The wash temperature is 30°C, water hardness is 20gpg.
**Cycle 2:** The whiteness tracers and ballast from each pot are then washed and rinsed again together with a new set of SBL2004 (5x5cm, 21 pieces) follow the process of cycle 1. All other conditions remain same as cycle 1.
**Cycle 3:** The whiteness tracers and ballast from each pot are then washed and rinsed again together with a new set of SBL2004 (5x5cm, 21 pieces) follow the process of cycle 1. All other conditions remain same as cycle 1.
**Cycle 4:** The whiteness tracers and ballast from each port are then washed and rinsed again together with a new set of SBL2004 (5x5cm, 21 pieces) follow the process of cycle 1. All other conditions remain same as cycle 1.

After Cycle 4, all whiteness tracers & ballast are tumbled dried between 60-65°C until dry, the tracers are then measured again using Konica Minolta CM-3610D spectrophotometer. The changes in Whiteness Index (ΔWI(CIE)) are calculated based on L, a, b measure before and after wash.

$$\Delta WI(CIE) = WI(CIE)(after\ wash) - WI(CIE)(before\ wash).$$

**Polymer Performance in hand dish detergent**

Hand dish detergent composition below are prepared by traditional means known to those of ordinary skill in the art by mixing the listed ingredients. The impact of inventive polymers on suds mileage are evaluated by comparing the suds mileage of formulation A (Reference) and B (Reference with inventive polymers) in **Table 8.** The suds mileage performance is evaluated using method for evaluating suds mileage of hand dish compositions described herein, and Suds Mileage Index is reported in **Table 9.**

**Table 8**

| | A (Reference composition) | B (Test composition: Reference with inventive polymers) |
|---|---|---|
| Ingredient | % by weight of the composition | |
| NaCl | 0.9 | 0.9 |
| Polypropylene glycol (mw 2000) | 0.809 | 0.809 |
| Ethanol | 1.7 | 1.7 |
| Alkoxylated polyethyleneimine** | 0.432 | 0.432 |
| Magnesium sulfate heptahydrate | 0.04286 | 0.04286 |
| C12-13 AE0.6S anionic surfactant | 22.86 | 22.86 |
| C12-14 dimethyl amine oxide | 2.39 | 2.39 |
| BIT | 0.0045 | 0.0045 |
| Phenoxyethanol | 0.08 | 0.08 |
| NaOH | 0.24 | 0.24 |
| Perfume | 0.195 | 0.195 |
| Yellow Dye | 0.004 | 0.004 |
| Blue Dye | 0.00165 | 0.00165 |
| Inventive Polymer Examples | - | 1 |
| Water | Balance | Balance |

(continued)

| | A (Reference composition) | B (Test composition: Reference with inventive polymers) |
|---|---|---|
| Ingredient | % by weight of the composition | |
| pH (as 10w/v% product concentration in water) | 9.0 | 9.0 |
| *amphiphilic alkoxylated polyethyleneimine (total MW: about 28000 g/mol) with a polyethyleneimine backbone of MW 600 and alkoxylation chains each chain comprising 24 internal EO units and 16 terminal PO units. | | |

As indicated in **Table 9,** inventive polymers can deliver strong suds mileage benefit.

**Table 9**

| Inventive Polymer | Suds mileage index vs A (Ref) |
|---|---|
| 3 | 106 |
| 6 | 108 |
| 7 | 105 |
| 9 | 107 |
| 10 | 107 |
| 11 | 104 |
| 12 | 104 |
| 13 | 105 |
| 14 | 107 |
| 15 | 108 |

**Polymer Whiteness Performance in Liquid Detergent**

Water soluble unit dose detergent composition E and F below are prepared by traditional means known to those of ordinary skill in the art by mixing the listed ingredients **(Table 10).**

The whiteness maintenance of the inventive and comparative polymers are evaluated according to the method for evaluating whiteness performance of polymers by directly comparing the whiteness performance of reference composition E and test compositioin F. ΔWI(CIE) of compositoin F vs composition E is reported in **Table 11** as a indication of polymer whiteness performance benefit.

**Table 10**

| Ingredients | E (Reference composition) | F (Test composition: reference composition + Inventive or comparative polymer) |
|---|---|---|
| LAS (wt%) | 23.29 | 23.29 |
| AES (wt%) | 11.99 | 11.99 |
| AE NI (wt%) | 1.92 | 1.92 |
| Suds Suppressor (wt%) | 0.25 | 0.25 |
| Polymer Example (wt%) | 0.00 | 5.53 |
| DTPA (wt%) | 0.49 | 0.49 |
| HEDP (wt%) | 2.12 | 2.12 |
| Monoethanolamine (wt%) | 7.68 | 7.68 |
| 1,2 PropaneDiol (wt%) | 8.52 | 8.52 |

(continued)

| Ingredients | E (Reference composition) | F (Test composition: reference composition + Inventive or comparative polymer) |
|---|---|---|
| DiPropyleneGlycol (wt%) | 1.53 | 1.53 |
| Sodium Bisulphite (wt%) | 0.17 | 0.17 |
| $KSO_3$ (wt%) | 0.37 | 0.37 |
| $MgCl_2$ (wt%) | 0.30 | 0.30 |
| Citric Acid (wt%) | 0.66 | 0.66 |
| Fatty Acid (wt%) | 1.53 | 1.53 |
| Glycerine (wt%) | 4.49 | 4.49 |
| Brightener (wt%) | 0.37 | 0.37 |
| Blue dye (wt%) | 0.0059 | 0.0059 |
| Enzyme (including Protease, Amylase, and Mannanase) (wt%) | 0.0657 | 0.0657 |
| Preservative (wt%) | 0.009 | 0.009 |
| Hydrogenated castor oil (wt%) | 0.09 | 0.09 |
| Perfume (wt%) | 2.17 | 2.17 |
| Hueing Dye (wt%) | 0.053 | 0.053 |
| Water / minors (wt%) | Balance | Balance |

As shown in **Table 11,** the inventive polymer delivers significant whiteness benefit.

Although high biodegradability can be observed for comparative polymers 10, 12, 13, they cannot deliver meaningful whiteness benefit. This is because comparative polymer 10, 12, 13 have very low level of grafting: Sub (wt%) =0.001 as seen in **Table 5,** polymers cannot deliver enough whiteness performance benefit at such low grafting level.

**Table 11**

| | Polymer | ΔWI(CIE) vs Reference (on PE: 100% Polyester Knit) |
|---|---|---|
| Test Composition with Inventive polymers | 3 | 7.08 |
| | 4 | 10.24 |
| | 5 | 8.64 |
| | 6 | 5.95 |
| | 7 | 7.46 |
| | 8 | 8.03 |
| | 9 | 5.78 |
| | 10 | 6.73 |
| | 12 | 9.12 |
| | 13 | 8.85 |
| | 14 | 8.65 |
| | 15 | 11.03 |
| Test Composition with Comparative polymers | 10 | -2.88 |
| | 12 | -1.93 |
| | 13 | -0.30 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A graft polymer comprising:

   (A) a block copolymer backbone as a graft base, wherein said block copolymer backbone (A) is obtainable by polymerization of at least two monomers selected from the group of ethylene oxide, 1,2-propylene oxide, 1,2butylene -oxide, 2,3-butylene oxide, 1,2-pentene oxide or 2,3-pentene oxide, where said block copolymer backbone (A) has three or more alkylene oxide blocks;
   (B) polymeric sidechains grafted onto the block copolymer backbone (A), wherein said polymeric sidechains (B) are obtainable by polymerization of at least one vinyl ester monomer (B1),
   wherein the vinyl ester monomer (B1) comprises at least 50%, by weight of B1 monomers, vinyl acetate,
   wherein the polymer has an OG of greater than 0, wherein

   $$OG = a_X\, EO + b_X\, M_n^2 - c_X\, (M_n \times SUB) - d_X\, M_n + e_X\, SUB + h_X$$

   wherein:

   "$M_n$" is the number average molecular weight of the block copolymer backbone (A);
   "EO" is the molar ratio of ethylene oxide moieties to total alkylene oxide moieties present in the backbone (A), wherein EO is in the range of from 0 to less than 1.00,
   "SUB" is the weight percentage, by weight of the polymer, of polymeric sidechains (B);
   "$a_X$" is a coefficient and equals 7.06;
   "$b_X$" is a coefficient and equals $5.63\times10^{-7}$;
   "$c_X$" is a coefficient and equals $1.25\times10^{-3}$;
   "$d_X$" is a coefficient and equals $7.03\times10^{-3}$;
   "ex" is a coefficient and equals 3.66; and
   "$h_X$" is a coefficient and equals 16.3.

2. The graft polymer according to claim 1, wherein the graft polymer also has a FJ of greater than 0, wherein

   $$FJ = a_Y\, EO - b_Y\, M_n^2 + d_Y\, M_n + e_Y\, SUB - f_Y\, SUB^2 - g_Y\, (EO \times SUB) - h_Y$$

   wherein:

   "ay" is a coefficient and equals 446;
   "$b_Y$" is a coefficient and equals $4.02\times10^{-6}$;
   "$d_Y$" is a coefficient and equals 0.0168;
   "$e_Y$" is a coefficient and equals 281;
   "$f_Y$" is a coefficient and equals 229;
   "$g_Y$" is a coefficient and equals 1140; and
   "$h_Y$" is a coefficient and equals 83.6.

3. The graft polymer according to any preceding claim, wherein said polymeric sidechains (B) are obtainable by polymerization of at least one vinyl ester monomer (B1) and at least one N-vinylpyrrolidone monomer (B2).

4. The graft polymer according to any preceding claim, wherein "SUB" is the weight percentage, by weight of the polymer, of vinyl ester monomer side chains (B1).

5. The graft polymer according to any preceding claim, where the graft polymer comprises from 20% to 95% by weight of the block copolymer backbone (A) and from 5% to 80% by weight of the polymeric sidechains (B) (in relation to

the total weight of the graft polymer).

6. The graft polymer according to any preceding claim, wherein the block copolymer backbone (A) is obtainable by polymerization of:

(i) at least two monomers selected from the group of ethylene oxide, 1,2 propylene oxide or 1,2-butylene oxide; and/or
(ii) one of the at least two monomers employed is ethylene oxide; and/or
(iii) the number of individual alkylene oxide blocks (x) within the block copolymer backbone (A) is an integer, wherein x has a value of from 3 to 10.

7. The graft polymer according to claim 6, wherein block copolymer backbone (A) comprises ethylene oxide.

8. The graft polymer according to claim 6, wherein the number of individual alkylene oxide blocks (x) within the block copolymer backbone (A) is an integer, wherein x has a value of from 3 to 5.

9. The graft polymer according to any preceding claim, wherein

(i) the graft polymer has a weight average molecular weight $M_w$ of from 800 to 10,000 g/mol; and/or
(ii) the graft polymer has a polydispersity $M_w/M_n$ of less than 3.0, wherein:

"$M_w$" = weight average molecular weight [g/mol]; and
"$M_n$" = number average molecular weight [g/mol]; and/or

(iii) the block copolymer backbone (A) is capped at one or both endgroups, and/or
(iv) the block copolymer backbone (A) is a triblock copolymer of polyethylene oxide (PEG) and polypropylene oxide (PPG).

10. The graft polymer according to any preceding claim, wherein the block copolymer backbone (A) has the structure according to formula (A1) and/or formula (A2), wherein formula (A1) is defined as follows:

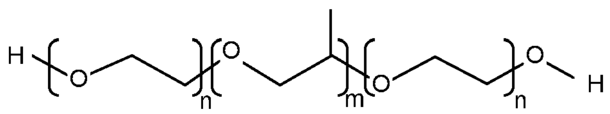

(A1)

wherein:

"n" is an integer in the range of 2 to 100, and
"m" is an integer in the range of 2 to 100; and
wherein formula (A2) is defined as follows:

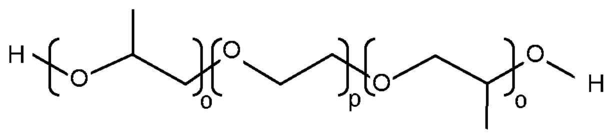

(A2)

wherein:

"o" is an integer in the range of 2 to 100, and
"p" is an integer in the range of 2 to 100.

11. The graft polymer according to any preceding claim, wherein the polymeric sidechains (B) are obtained by radical polymerization of:

(B1) from 50 to 100% by weight (in relation to the sum of (B1) and (B2)) of at least one vinyl ester monomer (B1), and

(B2) from 0 to 50% by weight (in relation to the sum of (B1) and (B2)) of N-vinylpyrrolidone as further monomer (B2),

wherein the polymeric sidechains (B) are optionally fully or partially hydrolyzed after polymerization.

**12.** A process for obtaining at least one graft polymer according to one of claims 1 to 11, wherein at least one monomer (B1) is polymerized in the presence of at least one block copolymer backbone (A),

wherein the process comprises the polymerization of at least one monomer (B1) selected from vinyl acetate or vinyl propionate in order to obtain the polymer sidechains (B) in the presence of at least one block copolymer backbone (A), a free radical-forming initiator (C) and at least one organic solvent (D), at a mean polymerization temperature at which the initiator (C) has a decomposition half-life of from 40 min to 500 min, in such a way that the fraction of unconverted graft monomers (B1) and initiator (C) in the reaction mixture is constantly kept in a quantitative deficiency relative to the block copolymer backbone (A),
and optionally, wherein the polymeric sidechains (B) are obtained by radical polymerization.

**13.** A fabric and home care product comprising at least one graft polymer according to any of claims 1 to 11.

**14.** The product according to claim 13, wherein the product is a composition in the form of a liquid, a gel, a powder, a hydrocolloid, an aqueous solution, a granule, a tablet, a capsule, a single compartment sachet, a pad, a multi-compartment sachet, a single compartment pouch, or a multi-compartment pouch.

**15.** The product of claims 13 to 14, wherein the product is a composition that further comprises an ingredient selected from: surfactant, an enzyme, a detergent builder, a complexing agent, a polymer, a soil release polymer, a surfactancy-boosting polymer, a bleaching agent, a bleach activator, a bleaching catalyst, a fabric conditioner, a clay, a foam booster, a suds suppressor, an anti-corrosion agent, a soil-suspending agent, an anti-soil re-deposition agent, a dye, a bactericide, a tarnish inhibitor, an optical brightener, a perfume, a saturated or unsaturated fatty acid, a dye transfer-inhibiting agent, a chelating agent, a hueing dye, a calcium cation, a magnesium cation, a visual signaling ingredient, an anti-foam, a structurant, a thickener, an anti-caking agent, a starch, sand, a gelling agent, or any combination thereof.

## Patentansprüche

**1.** Pfropfpolymer, umfassend:

(A) ein Blockcopolymergrundgerüst als eine Pfropfbase, wobei das Blockcopolymergrundgerüst (A) durch eine Polymerisation von mindestens zwei Monomeren erhältlich ist, die aus der Gruppe von Ethylenoxid, 1,2-Propylenoxid, 1,2-Butylenoxid, 2,3-Butylenoxid, 1,2-Pentenoxid oder 2,3-Pentenoxid ausgewählt sind, wobei das Blockcopolymergrundgerüst (A) drei oder mehr Alkylenoxidblöcke aufweist;
(B) polymere Seitenketten, die auf das Blockcopolymergrundgerüst (A) gepfropft sind, wobei die polymeren Seitenketten (B) durch Polymerisation mindestens eines Vinylestermonomers (B1) erhältlich sind,
wobei das Vinylestermonomer (B1) mindestens zu 50 Gew.-% von B1-Monomeren Vinylacetat umfasst,
wobei das Polymer ein OG von mehr als 0 aufweist, wobei

$$OG = a_X\ EO + b_X\ M_n^2 - c_X\ (M_n \times SUB) - d_X\ M_n + e_X\ SUB + h_X$$

wobei:

"$M_n$" die mittlere Molmasse des Blockcopolymergrundgerüsts (A) ist;
"EO" das Molverhältnis von Ethylenoxideinheiten zu Gesamtalkylenoxideinheiten ist, die in dem Grundgerüst (A) vorhanden sind, wobei EO in dem Bereich von 0 bis weniger als 1,00 liegt,
"SUB" der Gewichtsprozentsatz, von dem Gewicht des Polymers, von polymeren Seitenketten (B) ist;
"$a_X$" ein Koeffizient ist und 7,06 entspricht;
"$b_X$" ein Koeffizient ist und $5{,}63 \times 10^{-7}$ entspricht;
"$c_X$" ein Koeffizient ist und $1{,}25 \times 10^{-3}$ entspricht;
"$d_X$" ein Koeffizient ist und $7{,}03 \times 10^{-3}$ entspricht;

"$e_X$" ein Koeffizient ist und 3,66 entspricht; und
"$h_X$" ein Koeffizient ist und 16,3 entspricht.

**2.** Pfropfpolymer nach Anspruch 1, wobei das Pfropfpolymer ebenso ein FJ von mehr als 0 aufweist, wobei

$$FJ = a_Y\,EO - b_Y\,M_n^2 + d_Y\,M_n + e_Y\,SUB - f_Y\,SUB^2 - g_Y\,(EO \times SUB) - h_Y$$

wobei:

"$a_Y$" ein Koeffizient ist und 446 entspricht;
"$b_Y$" ein Koeffizient ist und $4{,}02 \times 10^{-6}$ entspricht;
"$d_Y$" ein Koeffizient ist und 0,0168 entspricht;
"$e_Y$" ein Koeffizient ist und 281 entspricht;
"$f_Y$" ein Koeffizient ist und 229 entspricht;
"$g_Y$" ein Koeffizient ist und 1140 entspricht; und
"$h_Y$" ein Koeffizient ist und 83,6 entspricht.

**3.** Pfropfpolymer nach einem der vorstehenden Ansprüche, wobei die polymeren Seitenketten (B) durch Polymerisation mindestens eines Vinylestermonomers (B1) und mindestens eines N-Vinylpyrrolidonmonomers (B2) erhältlich sind.

**4.** Pfropfpolymer nach einem der vorstehenden Ansprüche, wobei "SUB" der Gewichtsprozentsatz, von dem Gewicht des Polymers, von Vinylestermonomerseitenketten (B1) ist.

**5.** Pfropfpolymer nach einem der vorstehenden Ansprüche, wobei das Pfropfpolymer zu 20 Gew.-% bis 95 Gew.-% das Blockcopolymergrundgerüst (A) und zu 5 Gew.-% bis 80 Gew.-% die polymeren Seitenketten (B) (bezogen auf das Gesamtgewicht des Pfropfpolymers) umfasst.

**6.** Pfropfpolymer nach einem der vorstehenden Ansprüche, wobei das Blockcopolymergrundgerüst (A) durch Polymerisation erhältlich ist von:

(i) mindestens zwei Monomeren, ausgewählt aus der Gruppe von Ethylenoxid, 1,2-Propylenoxid oder 1,2-Butylenoxid; und/oder
(ii) eines der mindestens zwei eingesetzten Monomere Ethylenoxid ist; und/oder
(iii) die Anzahl einzelner Alkylenoxidblöcke (x) innerhalb des Blockcopolymergrundgerüsts (A) eine ganze Zahl ist, wobei x einen Wert von 3 bis 10 aufweist.

**7.** Pfropfpolymer nach Anspruch 6, wobei das Blockcopolymergrundgerüst (A) Ethylenoxid umfasst.

**8.** Pfropfpolymer nach Anspruch 6, wobei die Anzahl einzelner Alkylenoxidblöcke (x) innerhalb des Blockcopolymergrundgerüsts (A) eine ganze Zahl ist, wobei x einen Wert von 3 bis 5 aufweist.

**9.** Pfropfpolymer nach einem der vorstehenden Ansprüche, wobei

(i) das Pfropfpolymer ein durchschnittliches Molekulargewicht $M_w$ von 800 bis 10.000 g/mol aufweist; und/oder
(ii) das Pfropfpolymer eine Polydispersität $M_w/M_n$ von weniger als 3,0 aufweist, wobei:

"$M_w$" = durchschnittliches Molekulargewicht [g/mol]; und
"$M_n$" = mittlere Molmasse [g/mol]; und/oder

(iii) das Blockcopolymergrundgerüst (A) an einer oder beiden Endgruppen verkappt ist, und/oder
(iv) das Blockcopolymergrundgerüst (A) ein Triblockcopolymer von Polyethylenoxid (PEG) und Polypropylenoxid (PPG) ist.

**10.** Pfropfpolymer nach einem der vorstehenden Ansprüche, wobei das Blockcopolymergrundgerüst (A) die Struktur gemäß Formel (A1) und/oder Formel (A2) aufweist,
wobei Formel (A1) wie folgt definiert ist:

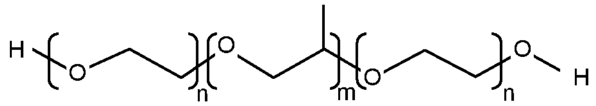

(A1)

wobei:

"n" eine ganze Zahl in dem Bereich von 2 bis 100 ist; und
"m" eine ganze Zahl in dem Bereich von 2 bis 100 ist; und
wobei Formel (A2) wie folgt definiert ist:

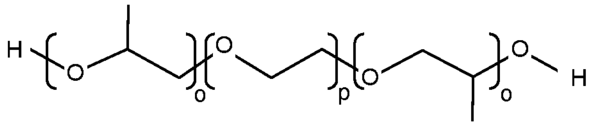

(A2)

wobei:

"o" eine ganze Zahl in dem Bereich von 2 bis 100 ist; und
"p" eine ganze Zahl in dem Bereich von 2 bis 100 ist.

**11.** Pfropfpolymer nach einem der vorstehenden Ansprüche, wobei die polymeren Seitenkennten (B) durch radikalische Polymerisation erhalten werden:

(B1) zu 50 bis 100 Gew.-% (bezogen auf die Summe von (B1) und (B2)) mindestens ein Vinylestermonomer (B1), und
(B2) zu 0 bis 50 Gew.-% (bezogen auf die Summe von (B1) und (B2)) N-Vinylpyrrolidon als weiteres Monomer (B2),

wobei die polymeren Seitenketten (B) nach der Polymerisation wahlweise vollständig oder teilweise hydrolysiert sind.

**12.** Verfahren zum Erhalten mindestens eines Pfropfpolymers nach einem der Ansprüche 1 bis 11, wobei mindestens ein Monomer (B1) unter Vorhandensein von mindestens einem Blockcopolymergrundgerüst (A) polymerisiert wird,

wobei das Verfahren die Polymerisation mindestens eines Monomers (B1) umfasst, das aus Vinylacetat oder Vinylpropionat ausgewählt ist, um die polymeren Seitenketten (B) unter Vorhandensein von mindestens einem Blockcopolymergrundgerüst (A), einem radikalausbildenden Initiator (C) und mindestens einem organischen Lösungsmittel (D), bei einer mittleren Polymerisationstemperatur, bei der der Initiator (C) eine Zersetzungshalbwertszeit von 40 min bis 500 min aufweist, auf solche Weise zu erhalten, dass die Fraktion von nicht umgewandelten Pfropfmonomeren (B1) und Initiator (C) in der Reaktionsmischung konstant in einem quantitativen Mangel bezogen auf das Blockcopolymergrundgerüst (A) gehalten wird,
und wahlweise, wobei die polymeren Seitenketten (B) durch radikalische Polymerisation erhalten werden.

**13.** Stoff- und Heimpflegeprodukt, umfassend mindestens ein Pfropfpolymer nach einem der Ansprüche 1 bis 11.

**14.** Produkt nach Anspruch 13, wobei das Produkt in der Form einer Flüssigkeit, eines Gels, eines Pulvers, eines Hydrokolloids, einer wässrigen Lösung, einer Granalie, einer Tablette, einer Kapsel, eines Einkammersiegelrandbeutels, einer Einlage, eines Mehrkammersiegelrandbeutels, eines Einkammerbeutels oder eines Mehrkammerbeutels vorliegt.

**15.** Produkt nach den Ansprüchen 13 bis 14, wobei das Produkt eine Zusammensetzung ist, die ferner ein Bestandteil umfasst, das ausgewählt ist aus: einem Tensid, einem Enzym, einem Waschmittelgerüststoff, einem Komplexbildner, einem Polymer, einem Schmutzabweisungspolymer, einem oberflächenaktivitätfördernden Polymer, einem Bleichmittel, einem Bleichmittelaktivator, einem Bleichkatalysator, einem Weichspüler, einem Ton, einem Schaumverstärker, einem Schaumunterdrücker, einem Korrosionsschutzmittel, einem Schmutzsuspendiermittel, einem Antischmutzwiederanlagerungsmittel, einem Farbstoff, einem Bacterizid, einem Anlaufinhibitor, einem optischen Aufheller, einem Duftstoff, einer gesättigten oder ungesättigten Fettsäure, einem Farbstoffübertragungsinhibitor, einem Chelatbildner, einem Abtönungsfarbstoff, einem Kalziumkation, einem Magnesiumkation, einem Bestandteil einer optischen Signalgebung, einem Schaumvermeider, einem Strukturmittel, einem Verdickungsmittel, einem Antibackmittel, einer Stärke, Sand, einem Geliermittel oder jeder Kombination davon.

## Revendications

**1.** Polymère greffé comprenant :

(A) un squelette de copolymère séquencé en tant que base de greffage, dans lequel ledit squelette de copolymère séquencé (A) peut être obtenu par polymérisation d'au moins deux monomères choisis parmi le groupe constitué d'oxyde d'éthylène, d'oxyde de 1,2-propylène, d'oxyde de 1,2 butylène, d'oxyde de 2,3-butylène, d'oxyde de 1,2-pentène ou d'oxyde de 2,3-pentène, où ledit squelette de copolymère séquencé (A) a trois blocs d'oxyde d'alkylène ou plus ;
(B) des chaînes latérales polymères greffées sur le squelette de copolymère séquencé (A), lesdites chaînes latérales polymères (B) pouvant être obtenues par polymérisation d'au moins un monomère d'ester vinylique (B1),
dans lequel le monomère d'ester vinylique (B1) comprend au moins 50 %, en poids de monomères B1, d'acétate de vinyle,
dans lequel le polymère a un OG supérieur à 0, dans lequel

$$OG = a_X\, EO + b_X\, M_n^2 - c_X\, (M_n \times SUB) - d_X\, M_n + e_X\, SUB + h_X$$

dans lequel :

« $M_n$ » est la masse moléculaire moyenne en nombre du squelette de copolymère séquencé (A) ;
« EO » est le rapport molaire des fragments d'oxyde d'éthylène aux fragments d'oxyde d'alkylène totaux présents dans le squelette (A), dans lequel EO est dans la plage allant de 0 à moins de 1,00,
« SUB » est le pourcentage en poids, en poids du polymère, des chaînes latérales polymères (B) ;
« $a_{X"}$ » est un coefficient et vaut 7,06 ;
« $b_X$ » est un coefficient et vaut $5{,}63\times10^{-7}$ ;
« $c_X$ » est un coefficient et vaut $1{,}25\times10^{-3}$ ;
« $d_X$ » est un coefficient et vaut $7{,}03\times10^{-3}$;
« $e_X$ » est un coefficient et vaut 3,66 ; et
« $h_X$ » est un coefficient et vaut 16,3.

**2.** Polymère greffé selon la revendication 1, dans lequel le polymère greffé a également un FJ supérieur à 0, dans lequel

$$FJ = a_Y\, EO - b_Y\, M_n^2 + d_Y\, M_n + e_Y\, SUB - f_Y\, SUB^2 - g_Y\, (EO \times SUB) - h_Y$$

dans lequel :

« $a_Y$ » est un coefficient et vaut 446 ;
« $b_Y$ » est un coefficient et vaut $4{,}02\times10^{-6}$ ;
« $d_Y$ » est un coefficient et vaut 0,0168 ;
« $e_Y$ » est un coefficient et vaut 281 ;
« $f_Y$ » est un coefficient et vaut 229 ;
« $g_Y$ » est un coefficient et vaut 1140 ; et
« $h_Y$ » est un coefficient et vaut 83,6.

**3.** Polymère greffé selon l'une quelconque revendication précédente, dans lequel lesdites chaînes latérales polymères (B) peuvent être obtenues par polymérisation d'au moins un monomère d'ester vinylique (B1) et d'au moins un monomère de N-vinylpyrrolidone (B2).

**4.** Polymère greffé selon l'une quelconque revendication précédente, dans lequel « SUB » est le pourcentage en poids, en poids du polymère, de chaînes latérales de monomère d'ester vinylique (B1).

**5.** Polymère greffé selon l'une quelconque revendication précédente, où le polymère greffé comprend de 20 % à 95 % en poids du squelette de copolymère séquencé (A) et de 5 % à 80 % en poids des chaînes latérales polymères (B) (par rapport au poids total du polymère greffé).

**6.** Polymère greffé selon l'une quelconque revendication précédente, dans lequel le squelette de copolymère séquencé (A) peut être obtenu par polymérisation de :

(i) au moins deux monomères choisis parmi le groupe constitué d'oxyde d'éthylène, d'oxyde de 1,2-propylène ou d'oxyde de 1,2-butylène ; et/ou
(ii) un des au moins deux monomères employés est l'oxyde d'éthylène ; et/ou
(iii) le nombre de blocs d'oxyde d'alkylène individuels (x) au sein du squelette de copolymère séquencé (A) est un nombre entier, dans lequel x a une valeur allant de 3 à 10.

**7.** Polymère greffé selon la revendication 6, dans lequel le squelette de copolymère séquencé (A) comprend de l'oxyde d'éthylène.

**8.** Polymère greffé selon la revendication 6, dans lequel le nombre de blocs d'oxyde d'alkylène individuels (x) au sein du squelette de copolymère séquencé (A) est un nombre entier, dans lequel x a une valeur allant de 3 à 5.

**9.** Polymère greffé selon l'une quelconque revendication précédente, dans lequel :

(i) le polymère greffé a une masse moléculaire moyenne en poids $M_w$ de 800 à 10 000 g/mol ; et/ou
(ii) le polymère greffé a une polydispersité $M_w/M_n$ inférieure à 3,0, dans lequel :

« $M_w$ » = masse moléculaire moyenne en poids [g/mol] ; et
« $M_n$ » = masse moléculaire moyenne en nombre [g/mol] ; et/ou

(iii) le squelette de copolymère séquencé (A) est coiffé sur un ou les deux groupes terminaux, et/ou
(iv) le squelette de copolymère séquencé (A) est un copolymère triséquencé d'oxyde de polyéthylène (PEG) et d'oxyde de polypropylène (PPG).

**10.** Polymère greffé selon l'une quelconque revendication précédente, dans lequel le squelette de copolymère séquencé (A) a la structure selon la formule (A1) et/ou la formule (A2),
dans lequel la formule (A1) est définie comme suit :

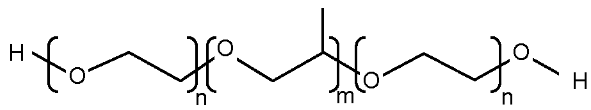

(A1)

dans laquelle :

« n » est un nombre entier dans la plage allant de 2 à 100, et
« m » est un nombre entier dans la plage allant de 2 à 100 ; et
dans laquelle la formule (A2) est définie comme suit :

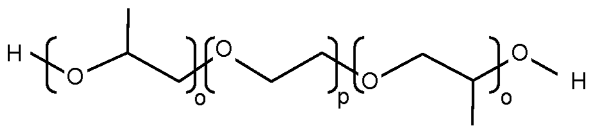

(A2)

dans laquelle :

« o » est un nombre entier dans la plage allant de 2 à 100 ; et
« p » est un nombre entier dans la plage allant de 2 à 100.

**11.** Polymère greffé selon l'une quelconque revendication précédente, dans lequel les chaînes latérales polymères (B)

sont obtenues par polymérisation radicalaire de :

(B1) de 50 à 100 % en poids (par rapport à la somme de (B1) et (B2) d'au moins un monomère ester vinylique (B1), et
(B2) de 0 à 50 % en poids (par rapport à la somme de (B1) et (B2)) de N-vinylpyrrolidone en tant que monomère supplémentaire (B2),

dans lequel les chaînes latérales polymères (B) sont facultativement totalement ou partiellement hydrolysées après polymérisation.

**12.** Procédé d'obtention d'au moins un polymère greffé selon l'une des revendications 1 à 11, dans lequel au moins un monomère (B1) est polymérisé en présence d'au moins un squelette de copolymère séquencé (A),

dans lequel le processus comprend la polymérisation d'au moins un monomère (B1) choisi parmi l'acétate de vinyle ou le propionate de vinyle de manière à obtenir les chaînes latérales de polymère (B) en présence d'au moins un squelette de copolymère séquencé (A), d'un inducteur de formation de radicaux libres (C) et d'au moins un solvant organique (D), à une température de polymérisation moyenne à laquelle l'inducteur (C) a une demi-vie de décomposition allant de 40 min à 500 min, de telle manière que la fraction de monomères greffés non convertis (B1) et l'inducteur (C) dans le mélange réactionnel soient constamment maintenus en une déficience quantitative par rapport au squelette de copolymère séquencé (A),
et facultativement, dans lequel les chaînes latérales polymères (B) sont obtenues par polymérisation radicalaire.

**13.** Tissu et produit d'entretien ménager comprenant au moins un polymère greffé selon l'une quelconque des revendications 1 à 11.

**14.** Produit selon la revendication 13, dans lequel le produit est une composition sous la forme d'un liquide, d'un gel, d'une poudre, d'un hydrocolloïde, d'une solution aqueuse, d'un granule, d'un comprimé, d'une gélule, d'un sachet à compartiment unique, d'un tampon, d'un sachet à compartiments multiples, d'une pochette à compartiment unique ou d'une pochette à compartiments multiples.

**15.** Produit selon les revendications 13 et 14, dans lequel le produit est une composition qui comprend en outre un ingrédient sélectionné parmi : un agent tensioactif, une enzyme, un adjuvant de détergent, un agent complexant, un polymère, un polymère anti-salissures, un polymère renforçant le pouvoir tensioactif, un agent de blanchiment, un activateur de blanchiment, un catalyseur de blanchiment, un assouplissant textile, une argile, un renforçateur de mousse, un suppresseur de mousse, un agent anticorrosif, un agent de suspension des salissures, un agent anti-redéposition des salissures, un colorant, un bactéricide, un inhibiteur de ternissement, un azurant optique, un parfum, un acide gras saturé ou insaturé, un agent inhibiteur de transfert de colorant, un agent chélateur, un colorant de teinte, un cation calcium, un cation magnésium, un ingrédient de signalisation visuelle, un anti-mousse, un structurant, un épaississant, un anti-agglomérant, un amidon, du sable, un agent gélifiant, ou une quelconque combinaison de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007138053 A
- WO 03042262 A
- US 5318719 A
- EP 0362688 A
- EP 3222647 A
- WO 2014019903 A
- WO 2014019658 A
- WO 2014019659 A
- WO 2019111948 A
- WO 2019111949 A
- WO 2019111946 A
- WO 2019111947 A


### Non-patent literature cited in the description


- **Y. ZHANG et al.** *J. Coll. Inter. Sci,* 2005, vol. 285, 80
- **H. FIKENTSCHER.** *Cellulosechemie,* 1932, vol. 13, 58